# EUROPEAN PATENT APPLICATION

(11) **EP 4 814 166 A2**
(43) Date of publication of application: **30.09.2026**
(21) Application number: 26198871.1
(22) Date of filing: 06.12.2022
(51) Int. Cl.: C25B 11/03

(54) **FLOW THROUGH ELECTRODE ASSEMBLY AND STACK**

(30) Priority: 22.12.2021 GB 202118860; 25.07.2022 GB 202210831
(62) Document number(s) of the earlier application(s) in accordance with Art. 76 EPC: 22834856.1 / 4 453 287
(71) Applicant: Geary, Paul Francis, Nottingham NG4 2HD (GB)
(72) Inventor: Geary, Paul Francis, Nottingham NG4 2HD (GB)
(74) Representative: Harner-Foreman, Frank Jakob

(57) **Abstract**

The present disclosure relates to an electrode assembly for a bipolar electrolyser stack, preferably for an electrolyser stack, comprising: a first flow-through electrode comprising a first surface that is permeable to gases produced by the decomposition of a process solution, preferably water, and an opposite second surface; a second flow-through electrode comprising a first surface that is permeable to gases produced by the decomposition of a process solution, preferably water, and an opposite second surface; and a non-permeable divider arranged between the second surfaces of the first and second flow-through electrodes and adapted to separate the first and second flow-through electrodes from each other.

## Description

The present disclosure relates to an electrode assembly for a bipolar electrolyser stack. The electrode assembly of the present disclosure is used in electrolysis, particularly but not exclusively, for generating hydrogen. Another aspect relates to a method of manufacturing an electrode assembly. Another aspect of the present disclosure relates to an electrode stack comprising flow-through electrodes. Yet another aspect of the present disclosure relates to an electrolyser.

The process of using electricity to decompose water into oxygen and hydrogen gas is known as electrolysis of water. Hydrogen gas produced in this way can be used in various applications and has become widely known as an energy dense option for fuelling vehicles. In other applications, electrolysis of water may be used as a decentralised storage solution storing electrical energy as chemical energy, particularly electrical energy obtained via renewable power. In recent years, therefore, demand for hydrogen, inter alia, as a fuel for so called hydrogen fuel cells has increased rapidly.

Electrolysers can be grouped into proton exchange membrane (PEM) electrolysers, alkaline electrolysers and solid oxide electrolysers. These different types of electrolysers function in slightly different ways depending on the electrolyte material involved. Yet, some of the most prominent drawbacks of most electrolysers include overall inefficiencies and/or failure to supply hydrogen gas at pressures required for further use.

In order to maximize the amount of gas (e.g. oxygen/hydrogen) produced with common electrolysers, it is known to arrange a multitude of electrodes parallel to each other in a device known as an "electrode stack". Such electrode stacks include multiple electrolyte chambers, each between neighbouring electrodes, thereby enabling large electrode surface areas to be in contact with the electrolyte solution without requiring large space envelopes. Although electrode stacks are useful to combine a plurality of electrolysers in the smallest possible space, such known stacks are still of significant size, particularly when trying to generate hydrogen for commercial use. Using electrode stacks for domestic purposes is also not currently feasible due to its size and weight.

It is an aim of the present disclosure to solve or at least ameliorate one or more of the problems of the prior-art. In particular, it is an object of the present invention to provide an improved electrode stack and corresponding electrodes that reduce the effective space/weight requirements and, at the same time, increase the output of reaction gases, such as hydrogen and oxygen.

### SUMMARY OF THE INVENTION

Aspects and embodiments of the present disclosure provide an electrode assembly for an electrode stack, an electrode stack, and an electrolyser for generating hydrogen from water as claimed in the appended claims.

In one aspect, the present disclosure relates to an electrode assembly for a bipolar electrolyser stack, preferably for an electrolyser stack for generating hydrogen, comprising:
- a first flow-through electrode comprising a first surface that is permeable to gases produced by the decomposition of a process solution, preferably water, and an opposite second surface;
- a second flow-through electrode comprising a first surface that is permeable to gases produced by the decomposition of a process solution, preferably water, and an opposite second surface;
- a non-permeable divider arranged between the second surfaces of the first and second flow-through electrodes and adapted to separate the first and second flow-through electrodes from each other.

In another embodiment, the electrode assembly comprises a housing, preferably disc-shaped housing, adapted to receive the first flow-through electrode, the second flow-through electrode, and the non-permeable divider, wherein the housing comprises at least one first gas collection opening for receiving gases produced by decomposition of a process solution in the first flow-through electrode and at least one second gas collection opening for receiving gases produced by decomposition of a process solution in the second flow-through electrode.

In another embodiment, the at least one first gas collection opening is isolated from the second flow-through electrode, and/or wherein the at least one second gas collection opening is isolated from the first flow-through electrode.

In another embodiment, the at least one first gas collection opening circumferentially offset from the at least one second gas collection opening.

In another embodiment, the first flow-through electrode comprises at least one outlet lug protruding radially from a circumferential surface of the first flow-through electrode, said at least one outlet lug comprising an outlet opening that is aligned with the at least one first gas collection opening of the housing, and/or wherein the second flow-through electrode comprises at least one outlet lug protruding radially from a circumferential surface of the second flow-through electrode, said at least one outlet lug comprising an outlet opening being aligned with the at least one second gas collection opening of the housing.

In another embodiment, the first and second flow-through electrodes are substantially disc-shaped and arranged in parallel within the housing, and wherein the first and second flow-through electrodes are offset from each other in a circumferential direction.

In another embodiment, the housing comprises an alignment element, particularly an alignment collar, for arranging the first and second flow-through electrodes in a circumferentially offset manner.

In another embodiment, the alignment element comprises at least one first protrusion, particularly a radial protrusion, adapted to engage at least one first recess, particularly a radial recess, of the first flow-through electrode, and wherein the alignment element comprises at least one second protrusion, particularly a radial protrusion, adapted to engage at least one second recess, particularly a radial recess, of the second flow-through electrode.

In another embodiment, the housing comprises at least one electrolyte water channel, preferably extending longitudinally through the housing, and at least one connection duct configured to fluidly connect the at least one electrolyte channel with the first and/or the second flow-through electrode.

In another embodiment, the electrolyte water channel is circumferentially interspersed between the gas collection openings of the housing.

In another embodiment, the housing comprises a first electrolyte water channel for providing a first electrolyte solution to the first flow-through electrode and a second electrolyte water channel for providing a second electrolyte solution to the second flow-through electrode, said first and second electrolyte water channels extending substantially in parallel through the housing.

In another embodiment, the at least one connection duct is a radial duct, preferably a radial groove.

In another embodiment, the first flow-through electrode and/or the second flow-through electrode comprises:
- a first porous layer permeable to gases produced by the decomposition of electrolyte water;
- a second porous layer permeable to gases produced by the decomposition of electrolyte water, said second porous layer being arranged adjacent to the first porous layer,
wherein the second porous layer has a larger porosity than the first porous layer.

In another embodiment, the first surface is arranged on the first porous layer, and wherein the second surface is arranged on the second porous layer.

In another embodiment, the first and second porous layers are made from different raw product, preferably the first porous layer being made from sintered powder material and the second porous layer being made from sintered swarf.

In another embodiment, the electrode assembly comprises a housing, preferably disc-shaped housing, adapted to receive the first flow-through electrode, the second flow-through electrode, and the non-permeable divider, wherein the housing comprises at least one first gas collection opening for receiving gases produced by decomposition of a process solution in the first flow-through electrode and at least one second gas collection opening for receiving gases produced by decomposition of a process solution in the second flow-through electrode, wherein the second porous layer of the first flow-through electrode is connected the first gas collection opening, and wherein the second porous layer of the second flow-through electrode is connected the second gas collection opening.

According to another aspect, there is provided an electrode stack comprising:
- a first electrode assembly as described above;
- a second electrode assembly as described above; and
- an electrolyte chamber extending between a first surface of the first electrode assembly and a first surface of the second electrode assembly.

In another embodiment, the stack comprises a gasket arranged between the first and second electrodes, said gasket acting as a spacer between the first and second electrode for creating a cell gap defining the electrolyte chamber.

According to another aspect, there is provided a method of manufacturing an electrode assembly for electrolysis of water comprising:
- providing a non-permeable divider;
- sintering a second porous layer made of a second material onto the non-permeable divider;
- sintering a first porous layer made of a first material onto the second porous layer;
wherein the first and second materials are chosen such that the second porous layer has a larger porosity than the first porous layer.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

The aforementioned and other features and advantages of this disclosure, and the manner of attaining them, will become more apparent and the disclosure will be better understood by reference to the following description of embodiments of the disclosure taken in conjunction with the accompanying drawings, wherein:
FIG. 1A shows a front view of an electrode for an electrolysis stack;
FIG. 1B shows a cross section through the electrode shown in FIG. 1A along line A-A;
FIG. 2A shows a front view of a gasket used within the electrode stack of FIG1A;
FIG. 2B shows a cross section of the gasket shown in FIG. 2A along line B-B;
FIG. 3 shows a front view of an electrode;
FIG. 4 shows a cross section of the electrode shown in FIG. 3 along line C-C;
FIG. 5 shows an electrode used as an anode;
FIG. 6 shows a cross section of the electrode stack, said cross section showing the first gas collection opening and the first electrolyte collection opening;
FIG. 7 shows a cross section of the electrode stack shown in FIG. 6 along the second gas collection opening and the second electrolyte collection opening;
FIG. 8A shows a front view of another electrode for an electrolyser stack;
FIG. 8B shows a cross section through the electrode shown in FIG. 8A along line D-D;
FIG. 9 shows a method of manufacturing an electrode according to FIGs. 1 to 5;
FIG. 10 shows an embodiment of an electrode assembly according to the present invention;
FIG. 11 shows a cross section of the electrode assembly of FIG. 10 along line E-E;
FIG. 12 shows an exploded view of the embodiment shown in FIG. 10;
FIG. 13 shows a cross-section of an electrode stack according to an embodiment of the present disclosure; and
FIG. 14 shows a schematic flow-chart of a method according to an embodiment to the present invention.

Corresponding reference characters indicate corresponding parts throughout the several views. The exemplifications set out herein illustrate embodiments of the disclosure, and such exemplifications are not to be constructed as limiting the scope of the disclosure in any manner.

### DETAILED DESCRIPTION

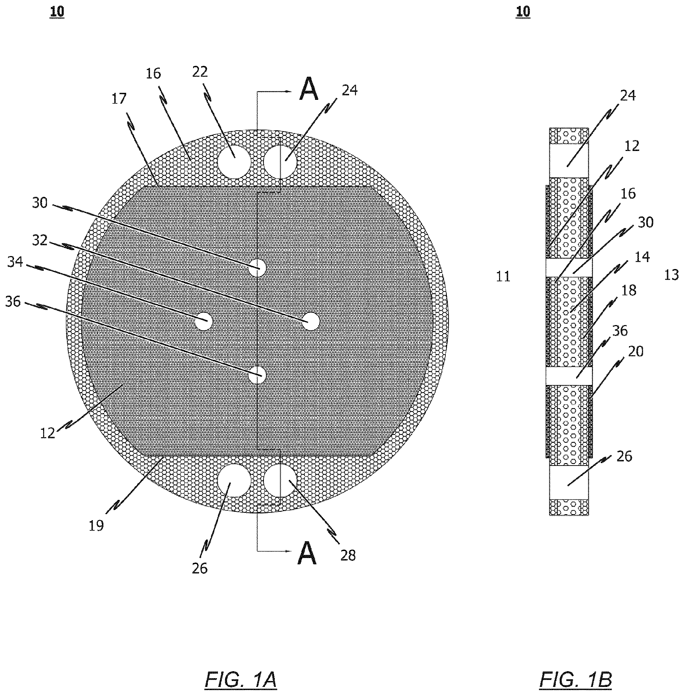

FIGs. 1A and 1B show different views of a porous structure used in an electrode according to the present disclosure. A front view of the porous structure 10 is shown in FIG. 1A. FIG. 1B shows a cross section of the porous structure 10 along line A-A.

The porous structure 10 comprises a first porous layer 12. The first porous layer 12 is permeable to gases produced by the decomposition of electrolyte water. In some examples, the first porous layer 12 may also be permeable to electrolyte water if a pressure differential between an electrolyte chamber (described in more detail below) and a gas collection region of the electrode exceeds a thresholds value.

The porous structure 10 comprises a second porous layer 14. The second porous layer 14 is also permeable to gases produced by the decomposition of electrolyte water. The second porous layer 14 is connected to the first porous layer 12.

In the example of FIGs. 1A and 1B, the second porous layer 14 is connected to the first porous layer 12 via a first intermediate layer 16. However, it should be understood that in other examples, the second porous layer 14 may be directly connected to the first porous layer 12, i.e., the second porous layer 14 may be arranged adjacent to the first porous layer 12 without any intermittent layers.

The first porous layer 12 has a smaller porosity than the second porous layer 14. In some examples, the pore sizes of the first porous layer 12 may be smaller than the pore sizes of the second porous layer 14. Suitable diameters of the pores, i.e. the pore sizes, of the first and second layers 12, 14 may vary depending on the type of electrolyte solution used during the electrolysis process. As will be appreciated by the skilled person, different solutions may require different pore sizes for effective penetration of the first and/or second porous layers during electrolysis.

In the example of FIGs. 1A and 1B, the first intermediate layer 16 may have a porosity that is larger than the porosity of the first porous layer 12 and smaller than the porosity of the second porous layer 14.

The porous structure 10 also comprises a third porous layer 20. The third porous layer 20 is connected to the second porous layer 14 on an opposite side to the first porous layer 12. In other words, the second porous layer 12 is sandwiched between the first and third porous layers 12, 20.

In the particular example of FIGs. 1A and 1B, a second intermediate layer 18 is arranged between the second porous layer 14 and the third porous layer 20.

The third porous layer 20 may have a porosity that is substantially identical to the porosity of the first porous layer. In this context, "substantially identical" means that due to natural restrictions in the production of porous structures in that pore sizes are not typically exactly repeatable for different layers. In other words, the porosity of the first and third porous layers 12, 20 may naturally vary to some extent despite being produced by the same process.

The third porous layer 20 may have a porosity that is lower than the porosity of the second porous layer 14.

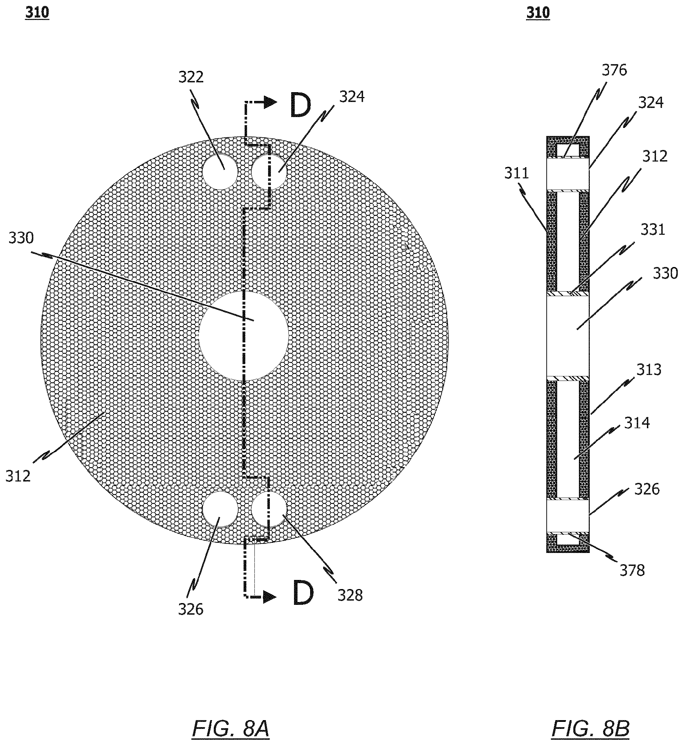

The porosity of the second intermediate layer 18 is higher than the porosity of the third porous layer 20 and lower than the porosity of the second porous layer 14. In some examples, the porosity of the second intermediate layer 18 may be substantially identical to the porosity of the first intermediate layer 16. In some examples, there may be no second intermediate layer, such that the third porous layer 20 may be directly connected to the second porous layer 14, i.e. arranged adjacent to the second porous layer 14. In such an example, the porous structure 10 of the present disclosure would only consist of the first, second, and third porous layers 12, 14, 20. In fact, in some examples of the of the present disclosure, the porous structure may only include a single porous material with a unitary porosity (see Figs. 8A and 8B).

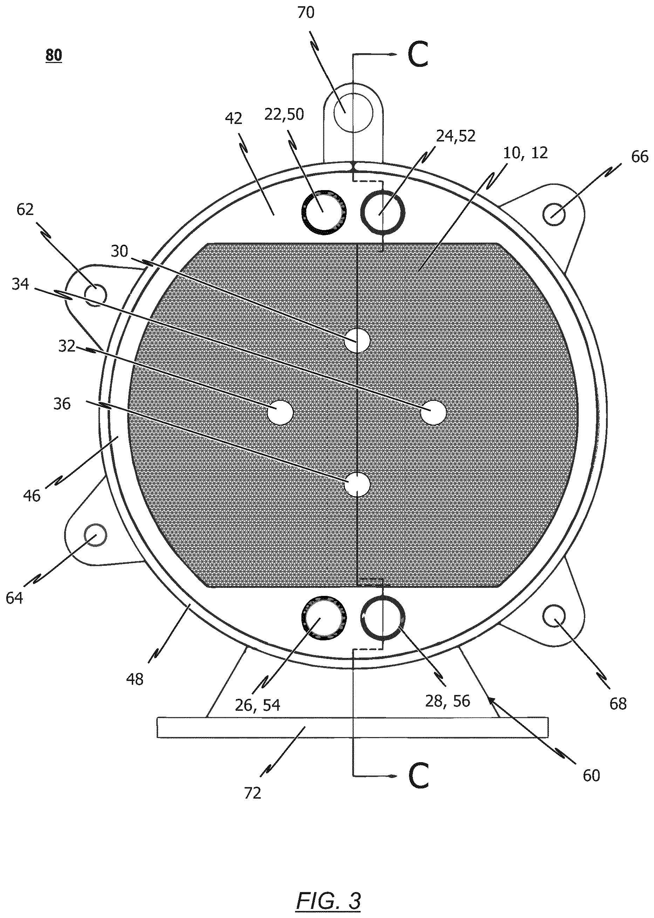

Turning back to the example shown in FIGs. 1A and 1B, the porous structure comprises first and second gas collection openings 22, 24. As will be appreciated particularly in view of the description of FIG. 3 below, the porous structure 10 may be part of a flow-through electrode for generating hydrogen from electrolyte water. Accordingly, the first and second gas collection openings 22, 24 are configured for extracting gases produced during the electrolysis from the porous structure 10 and directing it towards a corresponding gas tank or similar.

In the example of FIGs. 1A and 1B, the first and second gas collection openings extend through the porous structure 10. In particular, the first and second gas collection openings 22, 24 extend through the second porous layer 14 and the two intermediate layers 16, 18. The openings 22, 24 shown in FIGs. 1A and 1B are round bores extending through the porous structure 10. However, as will be appreciated, the first and second gas collection openings 22, 24 may have any other shape, such as rectangular, triangular or similar shapes, that may be suitable for extracting gases from the porous structure 10.

The first and second openings 22, 24 are arranged at an upper end of the porous structure shown in FIGs. 1A and 1B. In this regard, it should be noted that FIGs. 1A and 1B show the porous structure in an orientation in which the porous structure 10 is inserted into a corresponding electrode housing within an electrode stack. In other words, the first and second gas collection openings 22, 24 will be introduced into the porous structure 10 such that the openings 22, 24 will be in an upper half, preferably an upper third, more preferably an upper quarter, of the porous structure 10 when in use. An arrangement of the first and second gas collection openings 22, 24 in an upper part of the porous structure 10 will allow for easy extraction of the gases produced during electrolysis, due to the natural tendency of gases to rise.

The porous structure 10 further comprises first and second electrolyte collection openings 26, 28. The electrolyte collection openings 26, 28 are configured to collect electrolyte water that has penetrated the porous structure 10 during the electrolysis process, e.g. via the first porous layer 12 and the first intermediate layer 16 into the second porous layer 14. Such penetration of electrolyte water into an inner part of the porous structure 10 may occur due to high pressure differences between the electrolyte water within the electrolyte chamber (not shown) and a gas pressure within the second porous layer 14 of the porous structure 10.

The first and second electrolyte collection openings 26, 28 extend through the porous structure 10. In particular, the first and second electrolyte collection openings 26, 28 extend through the second porous layer 14 and the two intermediate layers 16, 18. The openings 26, 28 shown in FIGs. 1A and 1B are round bores extending through the porous structure 10. However, as will be appreciated, the first and second electrolyte collection openings 26, 28 may have any other shape, such as rectangular, triangular or similar shapes, that may be suitable for extracting gases from the porous structure 10.

The first and second electrolyte collection openings 26, 28 are arranged at a lower end of the porous structure 10 shown in FIGs. 1A and 1B. In this regard, it should be noted that FIGs. 1A and 1B show the porous structure in an orientation in which the porous structure 10 is inserted into a corresponding electrode housing within an electrode stack. In other words, the first and second electrolyte collection openings 26, 28 will be introduced into the porous structure 10 such that the electrolyte collection openings 26, 28 will be in a lower half, preferably a lower third, more preferably a lower quarter, of the porous structure 10 when in use. An arrangement of the first and second electrolyte collection openings 26, 28 in lower part of the porous structure 10 will allow for easy extraction of the electrolyte that penetrated the porous structure 10 during electrolysis, since electrolyte water will settle at the bottom of the electrode due to gravity.

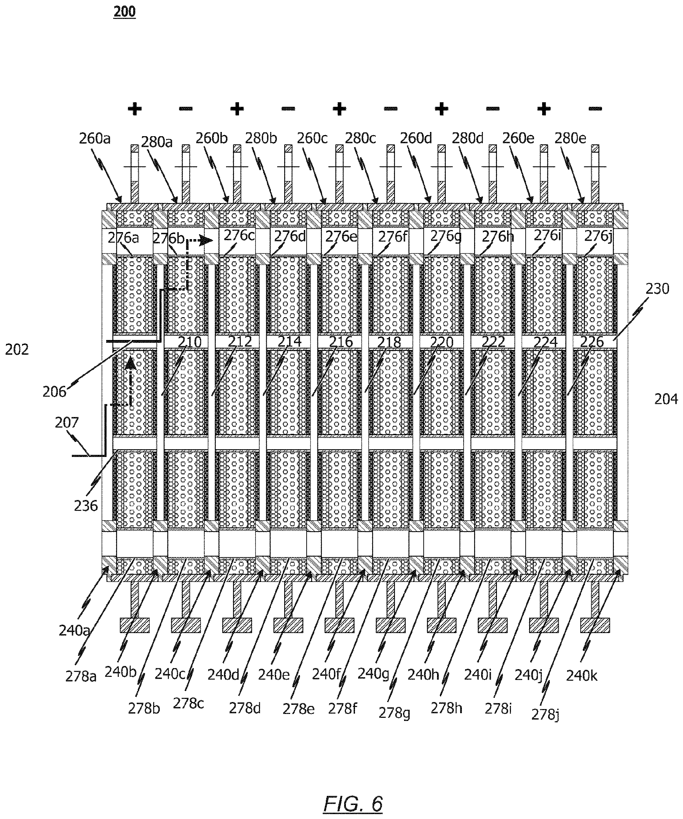

The porous structure 10 comprises one or more electrolyte water channels extending between a first side 11 of the porous structure 10 and a second side 13 of the porous structure 10. In the example of FIGs. 1A and 1B, the porous structure 10 comprises four electrolyte water channels 30, 32, 34, 36. Similar to the gas collection openings 22, 24 and the electrolyte collection openings 26, 28, the electrolyte water channels 30, 32, 34, 36 are shown as round bores extending perpendicularly through the porous electrode 10, which should not be considered as limiting. When the porous structure 10 is used in an electrode stack (e.g., FIG. 6), the electrolyte water channels 30 to 36 will connect the various electrolyte chambers of the different electrodes within the stack with each other, such that each electrolyte chamber is supplied with electrolyte water at substantially identical pressures. As will be appreciated, the size and number of electrolyte water channels extending through the porous structure 10 may vary depending on the amount and type of the electrolyte solution used. In detail, the electrolyte water channels of the porous structure 10 should be sized such that no pressure drop occurs between the different electrolyte chambers within the stack.

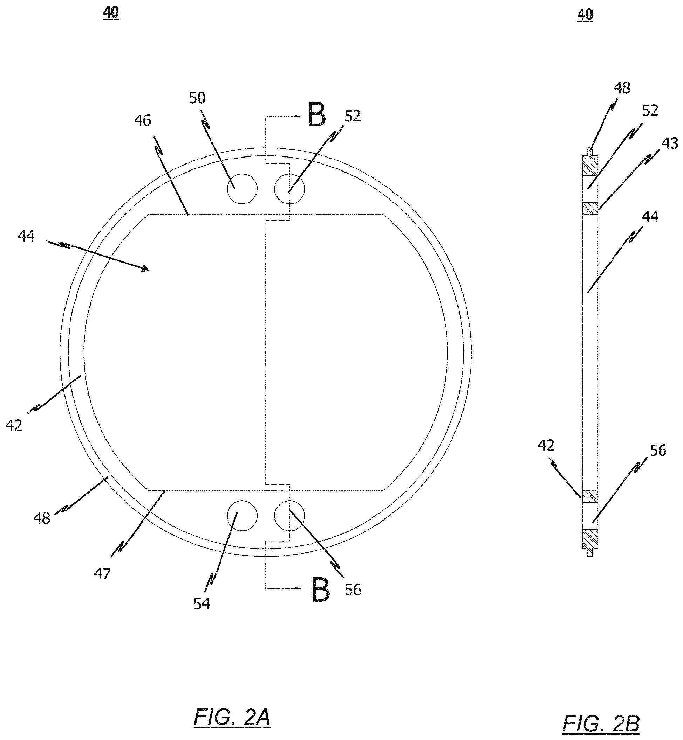

As is derivable from FIG. 1A, the first and second porous layers 12, 20 only partly cover the corresponding intermediate layers 16, 18 and the second porous layer 14 respectively. As will be described in more detail with reference to FIGs. 2A to 3, this part coverage of the first and third layers 12, 20 will allow stable and reproducible arrangement of a gasket (FIGs. 2A, 2B) on the porous structure 10. In order to avoid rotation of the gasket with respect to the porous structure 10, the first and third porous layers 12, 20 (only first porous layer shown) may include one or more flats 17, 19. The flats 17, 19 will also allow for easy and reproducible alignment of various openings within the gasket (FIGs. 2A, 2B) with the corresponding gas collection openings 22, 24 and electrolyte water collection openings 26, 28 of the porous structure 10.

Turning to FIGs. 2A and 2B, there is shown an example of a gasket 40 which may be used to separate adjacent electrodes of the present disclosure from each other when being inserted into an electrode stack. The gasket 40 is preferably made of a flexible material that is resistant to the electrolyte solution used during electrolysis.

The gasket 40 comprises a first surface 42 and an opposite, second surface 43. The gasket 40 is substantially ring shaped and comprises an opening 44 that extends through the gasket between the first surface 42 and the second surface 43.

Along parts of an edge of the opening 44, the gasket 40 comprises flats 46, 47. The opening 44 is configured to match the shape of the first and third porous layers 12, 20 described with reference to FIGs. 1A and 1B above. In particular, when the gasket is attached to the porous structure 10, the gasket will cover the first intermediate layer 16 shown in FIG. 1A, and thus extend around the first porous layer 12.

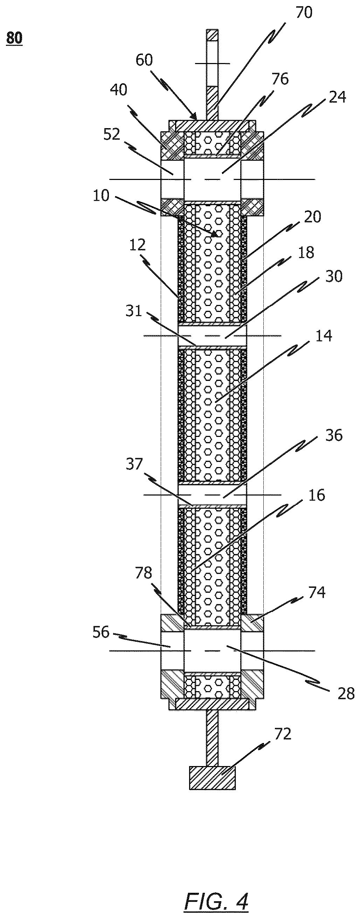

The gasket 40 has a thickness between its first and second surfaces 42, 43 that is larger than a thickness of the first layer 12 of the porous structure 10. As can be seen in the examples of FIGs. 4 and 6, this larger thickness means that the gasket 40 will extend over the first porous layer 12 and may thus be used to create a gap between adjacent electrodes. This gap defines an electrolyte chamber between adjacent electrodes. In one example, the gasket thickness is more than twice as thick as the first porous layer 12.

The gasket comprises a first gas collection opening 50 and a second gas collection opening 52. The first and second gas collection openings 50, 52 of the gasket 40 extend through the gasket 40 between its first and second surfaces 42, 43. The first and second gas collection openings 50, 52 are arranged on the gasket 40 in such a way that the first and second gas collection openings 50, 52 will align with the first and second gas collection openings 22, 24 of the porous structure 10, when in use.

The gasket 40 comprises first and second electrolyte collection openings 54, 56. The first and second electrolyte openings 54, 56 extend through the gasket 40 between its first and second surfaces 42, 43. The first and second electrolyte collection openings 54, 56 are arranged on the gasket 40 such that they will align with the first and second electrolyte collection openings 26, 28 of the porous structure 10, when in use.

The first and second gas collection openings 50, 52 comprise the same size and shape as the first and second gas collection openings 22, 24 of the porous structure 10. The first and second gas collection openings 50, 52 of the gasket 40 are configured to connect gas collection openings of adjacent electrodes when used in an electrode stack, such as the stack shown in FIG. 6. To this end, the gasket material surrounding the gas collection openings 50, 52 is non-porous, such that gas flowing through the gas collection openings 50, 52 will be guided between the first and second surfaces 42, 43 of the gasket 40, when in use.

The first and second electrolyte collection openings 54, 56 comprise the same size and shape as the first and second electrolyte collection openings 26, 28 of the porous structure 10. The first and second electrolyte collection openings 54, 56 of the gasket 40 are configured to connect electrolyte collection openings of adjacent electrodes when used in an electrode stack, such as the stack shown in FIG. 6. To this end, the gasket material surrounding the electrolyte collection openings 54, 56 is non-porous, such that electrolyte flowing through the electrolyte collection openings 54, 56 will be guided between the first and second surfaces 42, 43 of the gasket 40, when in use.

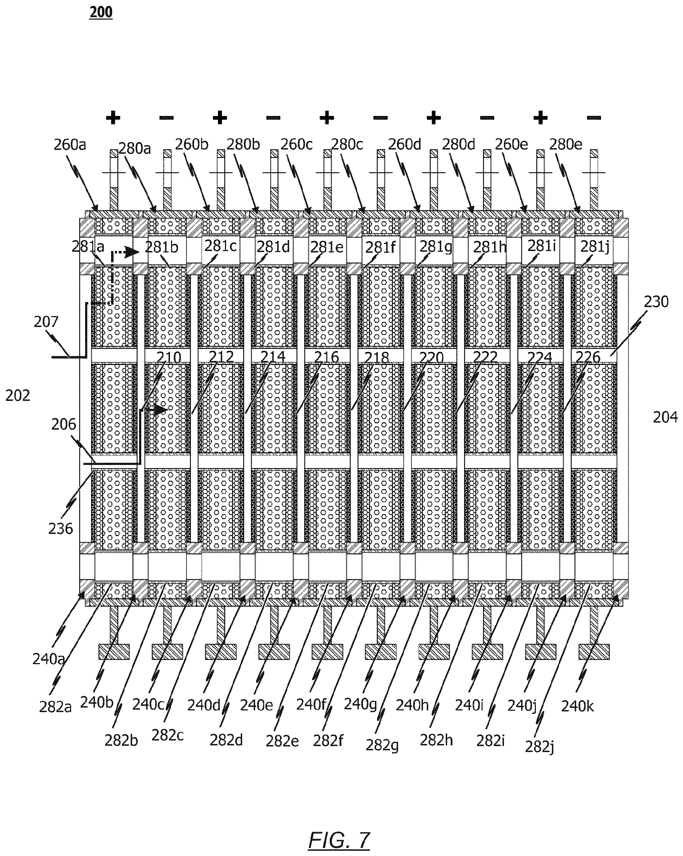

The gasket further comprises a lip 48 extending circumferentially around the ringshaped main body of the gasket 40. As is derivable from Figures 6 and 7, the lip 48 will act to separate and electrically isolate adjacent electrodes from each other.

FIG. 3 shows an electrode according to an example of the present invention. The electrode 80 shown in FIG. 3 comprises both the porous structure 10 and the gasket 40 described with reference to FIGs. 1A to 2B.

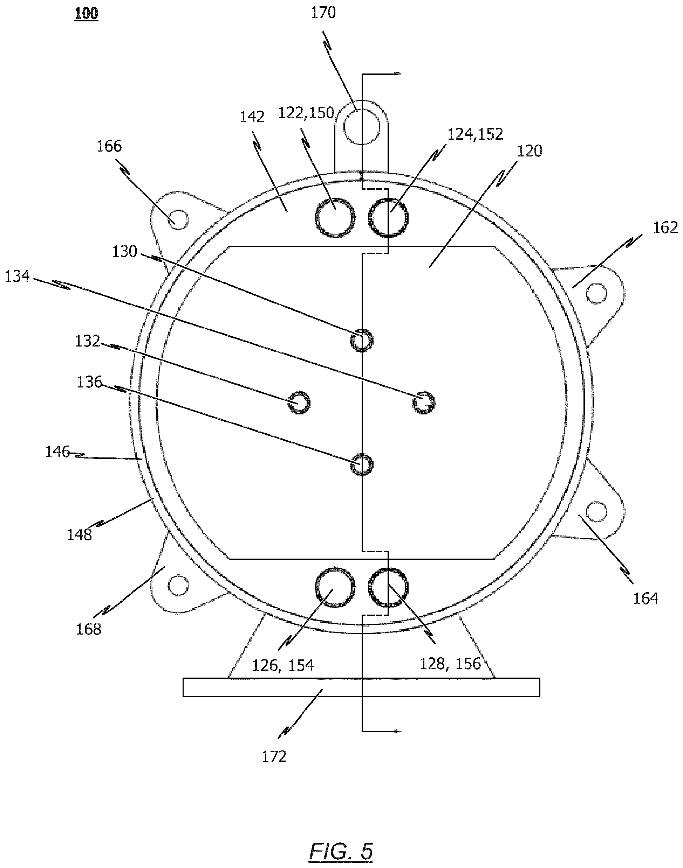

The electrode 80 comprises a housing 60 configured to receive the porous structure 10 and the gasket 40. In the example of FIGs. 3 and 4, the electrode 80 is shown in a cathode arrangement. However, the same construction of the electrode 80 may also be used in an electrode stack as an anode, as will be described in more detail with reference to FIG. 5.

The housing 60 extends around the circumference of the porous structure 10, as is shown in FIG. 4, for example. In particular, the housing 60 extends around the circumference of the second porous layer 14 and the intermediate layers 16, 18. It should be noted that the housing 60 is non-porous thereby preventing gases from escaping circumferentially from the porous structure 10.

In some examples, the housing 60 may be cast onto the circumference of the porous structure 10, before the gasket 40 is attached. In other examples, the housing 60 may be separately produced and welded, e.g., friction welded onto the circumference of the porous structure 10.

Once the housing is attached to the porous structure, a gasket 40 is added to one or both sides of the porous structure, as is shown in FIGs. 3 and 4. A first gasket 40 may be arranged on a first side of the porous structure 10, whereas a second gasket 74 may be arranged on a second, opposite side of the porous structure 10.

Once the gasket 40 is attached to the porous structure 10 and the housing 60 of the electrode 80, the gas collection openings 50, 52 of the gasket will align with the gas collection openings 22, 24 of the porous structure 10. Likewise, the electrolyte collection openings 54, 56 of the gasket 40 will align with the electrolyte collection openings 26, 28 of the porous structure 10.

The housing comprises one or more electrical contacts 62, 64, 66, 68. In the example of FIG. 3, the electrical contacts are configured as lugs distributed circumferentially around the electrode 80. Depending on the use of the electrode 80 as a cathode or an anode, electric power of a positive or negative polarity may be applied to the electrical contacts 62, 64, 66, 68 in order to provide the required electrical energy for the electrolysis process.

The housing 60 comprises a guide opening 70, which is constructed as a lug extending from the outer circumference of the housing 60. The guide opening 70 may be used to receive a guide bar for aligning and movably connecting a plurality of electrodes 80/100 (FIG. 5) in an electrode stack (FIG. 6).

The housing 60 further comprises a foot member 72. The foot member 72 is configured to match the shape of a guide rail (not shown) that may be part of the electrode stack and may allow movement of the electrodes with respect to each other, e.g., during heat expansion of the stack.

The housing 60 is made of a metallic material to allow electricity to travel through the housing into the porous structure 10. In some examples, the foot member 72 may be used as an earthing component that may be connected to a mass via the guide rail described herein before.

With particular reference to FIG. 4, there are shown a plurality of non-porous, i.e., non-permeable, pipes inserted into various openings/channels of the porous structure 10. In particular, the electrode 80 comprises a first non-porous pipe 76 inserted into the second gas collection opening 24. A second non-porous pipe 78 is inserted into the second electrolyte collection opening 28 of the porous structure 10. Third and fourth non-porous pipes 31, 37 are inserted into the first and fourth electrolyte channels 30, 36. Similarly, further non-porous pipes may be inserted into the second and third electrolyte channels 32, 34. However, it should be noted that no non-porous pipes will be inserted into the first gas collection opening 22 and the first electrolyte collection opening 26 as will be described in more detail below.

The non-porous pipes 76, 78, 31, 37 are configured to prevent gases and electrolyte water that has penetrated the first and/or the third porous layer 12, 14 of the porous structure 10 from leaving the inner region (or gas collection region) of the porous structure 10, thereby preventing gases from leaving the second porous layer and the intermediate layers 16, 18, via one of the openings 24, 28 or channels 30, 32, 34, 36 respectively. In other words, in the example of the electrode 80 (cathode) shown in FIGs. 3 and 4, the second gas collection opening 24, the second electrolyte collection opening 28 and all of the electrolyte channels 30, 32, 34, 36 are blanked off by means of non-porous pipes. In some examples, the non-porous pipes may not be separate parts that are inserted into the openings and channels after production of the porous structure 10. Rather, in some examples, the openings may be directly produced with a non-porous inner surface, e.g. by small particle sintering.

Whilst the second gas collection opening 24, the second electrolyte collection opening 26 and the electrolyte channels 30, 32, 34, 36 are blanked off in the example of FIGs. 3 and 4, this is not the case for the first gas collection opening 22 and the first electrolyte collection opening 26 of the porous structure 10 (not shown in FIG. 4). Rather, the first gas collection opening 22 and the first electrolyte collection opening 26 may either not be provided with an insert (e.g., a pipe) at all or with a porous pipe. Accordingly, the inner surface of the first gas collection opening 22 and the first electrolyte collection opening 26 of the electrode 80 is porous, such that gas collected within the porous structure, i.e. within the second porous layer 14 and the intermediate layers 16, 18, may leave the electrode 80 via the first gas collection opening 22. Likewise, electrolyte water penetrating into the inner region of the porous structure 10 may be extracted from the porous structure 10 via the first electrolyte collection opening 26 due to its porous inner surface.

FIG. 5 shows an example of an electrode according to the present disclosure when used as an anode. Due to the symmetrical configuration of the electrode according to the present disclosure, the example of electrode 100 may be identical to the electrode 80 shown in FIGs. 3 and 4 rotated by 180 degrees. The electrode 100 thus comprises the same parts as the electrode 80, which are labelled with identical reference signs increased by "100". Parts which have no different function compared to the corresponding parts of the example shown in FIGs. 3 and 4 will not be described in more detail below.

Although the parts of both electrodes 80 and 100 are identical, the electrode 100 shall be described from a point of view as seen in Figure 5. Accordingly, in the example of Figure 5, the electrode 100 comprises a non-porous pipe, which is inserted into the first gas collection opening 122. Similarly, a non-porous pipe is inserted into the first electrolyte collection opening 126. The second gas collection opening 124 and the second electrolyte collection opening 128 are provided with a porous inner surface, e.g. a porous pipe insert.

As a result of the different pipe arrangement in the electrode 100 shown in FIG. 5, gases produced by the second electrode 100 may not be removed from the electrode via its first gas collection opening 122. Rather, gases will now be removed via the second gas collection opening 124 due to its porous inner surface. Likewise, electrolyte water will not be removed from the porous structure of the electrode 100 via the first electrolyte collection opening 126. Rather, electrolyte water will be removed from the electrode 100 via the second electrolyte collection opening 128, due to its porous inner surface.

FIGs. 6 and 7 show a cross section through an electrode stack made up of ten electrodes according to the examples described with reference to FIGs. 3 to 5. The cross section shown in FIG. 6 corresponds to the cross section along line C-C shown in FIG. 3. In other words, the cross section in FIG. 6 is a cross section across the second gas collection openings and the second electrolyte collection openings of the electrodes. By contrast, the cross section shown in FIG. 7 is a cross section across the first gas collection openings and the first electrolyte collection openings of the respective electrodes.

The electrode stack 200 shown in FIGs. 6 and 7 comprises ten electrodes arranged in parallel. In particular, the stack 200 comprises five anode electrodes 260a, 260b, 260c, 260d, 260e interspersed with five corresponding cathode electrodes 280a, 280b, 280c, 280d, 280e. The anode electrodes 260a, 260b, 260c, 260d, 260e correspond to the orientation of the electrode 100 described with reference to FIG. 5. Similarly, the cathodes 280a to 280e correspond to the electrode 80 described with reference to FIGs. 3 and 4. Accordingly, adjacent electrodes only differ from each other in that the inner surface of the respective first and second gas collection and electrolyte collection openings are mismatched, i.e. all first gas collection openings of the anode electrodes 260a to 260e are porous, whereas all first gas collection openings of the cathode electrodes 280a to 280e are non-porous. Likewise, all second gas collection openings of the anode electrodes 260a to 260e are non-porous, whereas the second gas collection openings of the cathodes 280a to 280e are porous.

Adjacent electrodes are spaced and electrically insulated from each other by means of gaskets 240a, 240b, 240c, 240d, 240e, 240f, 240g, 240h, 240i, 240j, 240k, interspersed between neighbouring electrodes. In particular, a first gasket 240a is arranged on a first surface of a first anode electrode 260a. A second gasket 240b is connected to an opposite, second surface of the first anode electrode 260a. An opposite side of the second gasket 240b is connected to a first surface of a first cathode electrode 280a.

The second gasket 240b separates the first anode electrode 260a from the first cathode electrode 280a electrically and spatially. Accordingly, a first gap 210 is located between the first anode electrode 260 and the first cathode electrode 280a. This first gap 210 acts as a first electrolyte chamber between the first anode and cathode electrodes 260a, 280a. A third gasket 240c is arranged between the first cathode electrode 280a and the adjacent, second anode electrode 260b. Accordingly, the third gasket 240c separates the first cathode electrode 280a from the second anode electrode 260b such that a second gap 212 is formed there between. The second gap 212 acts as a second electrolyte chamber between the first cathode electrode 280a and the second anode electrode 260b.

As will be appreciated, the remaining gaskets 240d to 240j also separate anode electrodes 260c to 260e from their neighbouring cathode electrodes 280b to 280e, thereby creating further gaps 214, 216, 218, 220, 222, 224, 226 between adjacent electrodes. These gaps 214, 216, 218, 220, 222, 224, 226, in turn, define further electrolyte chambers of the electrode stack 200.

The electrolyte stack of the present disclosure may include more or fewer electrodes than the ten electrodes shown in the example of FIGs. 6 and 7. Furthermore, the electrode stack 200 may comprise end covers (not shown) arranged at first and second ends 202, 204 of the electrode stack 200. The end covers may be non-porous covers attached to the first and last gaskets 240a, 240k to seal off the interior of the electrode stack. As will be described in more detail below, the end covers may include one or more gas/electrolyte water ports for introducing and/or collecting gases and electrolyte water to and from the electrolyte stack. The covers may be biased against the electrodes, thereby sealing the ends 202, 204 and, at the same time, allowing for thermal expansion of the electrode stack 200.

As mentioned above, the cross section of FIG. 6 shows a cross section through the second gas collection openings and the second electrolyte collection openings of each of the electrodes 260a to 260e, 280a to 280e. The cross section of FIG. 6 also shows the first and fourth electrolyte water channels 230, 236 of each electrode. FIG. 6 illustrates how the second gas collection openings of each of the electrodes and the gaskets are aligned to create a second gas collection channel. Similarly, FIG. 7 shows how the first gas collection openings of each of the electrodes and the gaskets are aligned to create a first gas collection channel.

The same applies to the first and second electrolyte collection openings of the stack 200. In particular, each of the first electrolyte collection openings of the electrodes and the corresponding first electrolyte collection openings of the gaskets are aligned to create a first electrolyte collection channel shown in FIG. 7. Similarly, the second electrolyte collection openings of each of the electrodes and the gaskets are aligned to create a second electrolyte collection channel shown in FIG. 6.

FIGs. 6 and 7 also show that the electrolyte channels 230, 236 are aligned to create electrolyte channels that connect all of the electrolyte chambers with each other. However, it will be appreciated that an alignment of the electrolyte channels 230, 236 is not necessarily required for the function of the electrode stack of the present disclosure.

As shown in FIG. 6 and described with reference to the electrodes shown in FIGs. 3 to 5, the anode electrodes 260a to 260e are provided with non-porous pipes 276a, 276c, 276e, 276g, 276i arranged within their second gas collection openings. Similarly, the second electrolyte collection openings of each of the anode electrodes 260a to 260e are provided with non-porous pipes 278a, 278c, 278e, 278g, 278i. By contrast, the cathode electrodes 280a to 280e are provided with porous pipes 276b, 276d, 276f, 276h, 276j arranged within their second gas collection openings. Likewise, the cathode electrodes 280a to 280e are provided with porous pipe inserts 278b, 278d, 278f, 278h, 278j.

An opposite arrangement is provided for the first gas collection openings and the first electrolyte collection openings, as can be derived from FIG. 7. In particular, the first gas collection openings of the anode electrodes 260a to 260e are provided with porous pipe inserts 281a, 281c, 281e, 281g, 281i. Likewise, the first electrolyte collection openings of the anode electrodes 260a to 260e are provided with porous pipe inserts 282a, 282c, 282e, 282g, 282i. By contrast, the first gas collection openings of the cathode electrodes 280a to 280e are provided with non-porous pipe inserts 281b, 281d, 281f, 281h, 281j. Similarly, the first electrolyte collection openings of the cathode electrodes 280a to 280e are provided with non-porous pipe inserts 282b, 282d, 282f, 282h, 282j.

In the following, the operation of the electrode stack shown in FIGs. 6 and 7 shall be described in more detail. Electrolyte water may be supplied to the interior of the electrolyte stack continuously or intermittently, e.g. via a front cover attached to the first side 202 of the stack 200. As will be appreciated, when electrolyte water is first supplied (e.g. pumped) to the stack, air will need to be vented from all output points of the stack. Accordingly, the stack may be flushed with electrolyte water before the electrodes 260a to 260e, 280a to 280e are provided with electricity to start the electrolysis process. To this end, the stack may be arranged such that electrolyte water may be able to exit the stack through all of the porous gas/electrolyte collection openings and the channels created by them. This will purge the stack of air prior to start and application of electricity to the stack. The stack may be full of electrolyte before it can start to produce hydrogen and oxygen.

Electrolyte water introduced into the stack is distributed between the different electrolyte chambers defined by gaps 210 to 226 via the electrolyte channels 230, 236 (and also the two remaining channels not shown). The electrolyte water pressure within the various electrolyte chambers will be equal throughout the operation of the electrolyte stack. In other words, equal electrolyte water pressure will act on the first and second surfaces of each electrode 260a to 260e, 280a to 280e.

Each of the anode electrodes 260a to 260e will be supplied with electricity of a positive polarity, whereas each of the cathode electrodes 280a to 280e will be supplied with electricity of a negative polarity. Accordingly, electrolyte water will be decomposed into oxygen at the first surface (e.g., the first porous layer) and the second surface (e.g., the third porous layer) of each of the anode electrodes 260a to 260e. The oxygen will penetrate the porous layers of the anode electrodes 260a to 260e, thereby entering a gas collection region of the respective anode electrodes. In the example shown in FIGs. 6 and 7, the second porous layer and the intermediate layers define said gas collection region of the electrodes, i.e. an area arranged between the first and second surfaces of said electrodes. However, it will be appreciated that, in some examples (e.g. FIGs. 8A and 8B) the electrodes may not comprise the second porous layers and the intermediate layers at all, such that only a hollow space is provided between the first and third porous layers described in FIG. 1, for example. In other words, each of the electrodes 260a to 260e, 280a to 280e shown in FIGs. 6 and 7 may be double sided flow-through electrodes for the decomposition of electrolyte water into hydrogen or oxygen gasses, respectively.

Oxygen that penetrated the first and/or second surfaces, e.g. the first and third porous layers, of the anode electrodes 260a to 260e is represented by arrow 207 in Fig. 6. The oxygen cannot leave the gas collection region of the anode electrode 260a via its respective second gas collection opening, due to the non-porous pipe insert 276a. By contrast, hydrogen will flow-through the first and second surfaces of the negatively charged cathode electrodes 280a to 280e into the gas collection regions of said cathode electrodes. In Fig. 6 this is schematically represented by arrow 206. Such hydrogen may then leave the gas collection region, i.e. the second porous layer, of the cathode electrode 280a via the second gas collection opening of the cathode electrode 280a, due to the porous pipe insert 276b. The same applies to the remaining cathode electrodes 280b to 280e. Similarly, electrolyte water that penetrates the first and/or second surface of the anode electrodes 260a to 260e may not leave the gas collection region of the anode electrodes via their second electrolyte collection openings, due to the non-porous pipe inserts 278a, 278c, 278e, 278g, 278i. Yet, electrolyte water entering the cathode electrodes 280a to 280e via their first and/or second surfaces may be extracted from their gas collection region via their respective second electrolyte collection openings, due to the porous pipe inserts 278b, 278d, 278f, 278h, 278j.

In view of the above, the second gas collection channel created by the second openings of the electrodes 260a to 260e, 280a to 280e of the example shown in FIG. 6 is a hydrogen collection channel. Likewise, the second electrolyte collection channel created by the second electrolyte collection openings of each of the electrodes is an electrolyte collection channel that returns electrolyte water and gas from the cathode electrodes 280a to 280e.

Turning to FIG. 7, a cross section across the first gas collection openings and first electrolyte collection openings of each of the electrodes 260a to 260e, 280a to 280e is shown. Oxygen penetrating the first and/or second surfaces of the anode electrodes 260a to 260e may leave the gas collection region of the anode electrodes via their respective first gas collection openings, as is indicated by arrow 207. This is due to the porous pipe inserts 281a, 281c, 281e, 281g, 281i. By contrast, hydrogen penetrating the first and/or second surfaces of the cathode electrodes 280a to 280e may not leave the gas collection region of the cathode electrodes via their respective first gas collection openings. This is due to the non-porous pipe inserts 281b, 281d, 281f, 281h, 281j arranged within the first gas collection openings of the cathode electrodes. The same applies to electrolyte water penetrating the first and second surfaces of the anode and cathode electrodes 260a to 260e, 280a to 280e. In particular, electrolyte water penetrating the anode electrodes and gas formed in the anode electrodes 260a to 260e will be able to leave the anode electrodes 260a to 260e via their first electrolyte collection openings, whereas electrolyte and gas within the cathode electrodes will not be able to leave the latter via their respective first electrolyte collection openings. This is, in turn, due to the porous and non-porous pipe inserts 282a to 282j arranged within the first electrolyte collection openings.

In view of the above, the first gas collection channel created by the first gas collection openings of each electrode shown in FIG. 7 is an oxygen collection channel. Likewise, the first electrolyte collection channel created by the first electrolyte collection openings of each electrode 260a to 260e, 280a to 280e is a first electrolyte collection channel that may drain electrolyte water and gas from the anode electrodes 260a to 260e.

As will be appreciated, an electrolysis system comprising the electrode stack of the present disclosure may include a hydrogen gas separation tank connected to the second gas collection channel. The hydrogen gas separation tank may also be connected to the second electrolyte collection channel that is fed by the cathode electrodes 280a to 280e. The electrolysis system may also comprise an oxygen gas separation tank connected to the first gas collection channel. The oxygen gas separation tank may also be connected to the first electrolyte collection channel that is fed by the anode electrodes 260a to 260e. To this end, a front or back cover of the electrolyte stack may include a hydrogen gas outlet port connected to the second gas collection channel and an oxygen gas outlet port connected to the first gas collection channel, respectively. Similarly, the covers may include first and second electrolyte water drain ports connected to the first and second electrolyte collection channels.

In the electrode stack of FIGs. 6 and 7, a plurality of electrodes described with reference to FIGs. 3 to 5 were used. However, as briefly mentioned before, in some examples, the electrodes may not be "layered" electrodes. Rather, the electrodes may be made of a single, porous material with or without a hollow gas collection region arranged between opposite first and second porous surfaces. One example of a porous structure included in such an alternative electrode is shown in FIGs. 8A and 8B.

FIG. 8A shows a front view of the porous structure 310. FIG. 8B shows a cross section of the porous structure 310 along line D-D. The porous structure 310 comprises a porous substrate 312. The porous substrate 312 is a unitary substrate, i.e., the entire porous structure 310 is made of the same porous material. This also means that the entire substrate 312 has the same porosity. Again, the pore sizes of the substrate 312 may be tailored to the type of electrolyte solution used during the electrolysis process.

The porous structure 310 comprises a first gas collection opening 322 and a second gas collection opening 324. The porous structure 310 comprises a first electrolyte collection opening 326 and a second electrolyte collection opening 328. In another example, the porous structure 310 may only comprise a single electrolyte collection opening.

The first and second gas collection openings 322, 324 are configured for removing gases produced during the electrolysis from a gas collection region 314 of the porous structure 310. Similarly, the electrolyte collection openings 326, 328 may be used to drain electrolyte water that has penetrated the porous substrate 312 and entered the gas collection region 314.

An electrolyte water channel 330 extends through the porous structure 310, particularly through the centre of the porous structure 310. Compared to the example described in FIGs. 1A and 1B, the porous structure 310 only comprises a single electrolyte water channel 330, which may have a larger diameter than the four channels in Figure 1A to enable electrolyte water to flow freely between adjacent electrolyte chambers.

Similar to the example described in FIGs. 1A and 1B, one of the gas collection openings 322, 324 is provided with a porous pipe insert, whereas the other is provided with a non-porous pipe insert. Similarly, one of the electrolyte collection openings 326, 328 is provided with a porous pipe insert, whereas the other electrolyte collection opening is provided with a non-porous pipe insert. In the specific example shown in FIGs. 8A and 8B, it is the second gas collection opening 324 that is provided with a non-porous pipe insert 376. Similarly, the second electrolyte collection opening 328 is provided with a non-porous pipe insert 378. Although this is not shown in FIGs. 8A and 8B, the first gas collection opening 322 and the first electrolyte collection opening 326 of the porous structure 310 will thus be provided with a porous pipe insert. It should be noted that the pipe inserts discussed above are only one way of blanking-off some of the openings within the porous structure. Of course, any other way of producing porous and non-porous inner surfaces of the gas collection openings 322, 324 and the electrolyte collection openings 326, 328 are also feasible.

The electrolyte water channel 330 is provided with a non-porous pipe insert 331 as is derivable from FIG. 8B.

Similar to what has been described with reference to FIGs. 3 to 7, the porous structure 310 shown in FIGs. 8A and 8B may be used to build both anodes and cathodes of a flow-through electrode stack. To this end, the porous structure 310, much like the porous structure 10 shown in FIGs. 1A and 1B, is symmetrical about a vertical centre axis, such that the first and second gas collection openings 322, 324 are mirror images of each other. Likewise, the first and second electrolyte collection openings 326, 328 are mirror images of each other. The porous structure 310 is also symmetrical about a horizontal centre axis. In fact, the porous structure 310 is symmetrical with respect to the centre point of the electrolyte water channel 330 shown in Fig. 8A.

The porous structure 310 may be inserted into a housing similar to the housing shown in FIG. 3. A multitude of so formed electrodes may be arranged in parallel to form a stack. However, as described in detail above, adjacent electrodes will be flipped, so that their blanked off/non-porous openings will align with porous openings of the respective, adjacent electrodes. In other words, adjacent electrodes have an identical structure but are rotated by 180 degrees with respect to each other and supplied with electricity of a different polarity.

During the electrolysis process, electrolyte water will be pressurized against a first surface 311 and a second surface 313 of the porous structure 310. Depending on the polarity of the porous structure 310 (positive when part of an anode electrode, negative when part of a cathode electrode), either hydrogen or oxygen will be generated at and penetrate the first and/or second surface 311, 313 of the porous structure 310. In other words, both sides of the porous structure 310 represent flow-through surfaces.

Oxygen/Hydrogen gas penetrating the surfaces 311, 313 of the respective cathode and anode electrodes will enter the gas collection region 314. As will be appreciated from the cross section of FIG. 8B, the gas collection region of the porous structure 310 is hollow. In other words, the porous structure 310 is a hollow disk with openings 322, 324, 326, 328 extending between the first and second surfaces 311, 313.

Oxygen and/or hydrogen that entered the gas collection region 314 of the porous structure 310 may be removed via the gas collection opening that is provided with a porous inner surface (e.g. via a porous pipe insert). If the porous structures 310 are arranged in electrode stacks similar to the examples described in FIGs. 6 and 7, then oxygen produced at the anode electrodes will leave the anode electrodes via their first gas collection openings 322. Conversely, hydrogen produced at the cathode electrodes will leave the cathode electrodes at the second gas collection openings 324. In that way, a first gas collection channel connecting the first gas collection openings is an oxygen collection channel, whereas a second gas collection channel connecting the second openings is a hydrogen collection channel, similar to the example described in FIGs. 6 and 7.

Although, in the above, the gas and electrolyte collection openings have been described with different functionalities, particularly the gas collection openings acting to collect gas, and the electrolyte collection openings acting to collect electrolyte water. In reality, gas, electrolyte water, or a mixture of gas and electrolyte water may leave the electrodes via any of the porous openings. In other words, a perfect separation of gas and electrolyte water via the described openings may not always be possible. Indeed, electrolyte water will generally only penetrate the pores of the electrodes comparatively slowly (if at all), such that gases generated by the electrodes may flow out of the electrodes via both the porous gas collection openings and the porous electrolyte collection openings. Accordingly, in some examples, both the first gas collection channel and the first electrolyte collection channel may carry gases produced during electrolysis, and thus both channels may be connected to an electrolyte/gas separation tank, e.g. an oxygen separation tank. Similarly, the second gas collection channel and the second electrolyte collection channel may both carry gases and thus be connected to another electrolyte/gas separation tank, e.g. a hydrogen separation tank. Gases (e.g. hydrogen/oxygen) will be vented off the respective electrolyte/gas separation tanks and the remaining electrolyte water may be recirculated to the electrode stack.

Both porous structures 10, 310 described above may be used to construct double-sided flow-through electrodes suitable for use in an electrode stack. Due to their symmetry about a horizontal axis, both porous structures 10, 310 may be used to construct anode and cathode electrodes alike. The double-sided electrodes constructed with the porous structures 10, 310 significantly increase the contact area useable for electrolysis, since gas generation may occur at both a first and a second, opposite surface of the electrode.

All of the electrodes described above are flow-through electrodes in which gases produced during the electrolysis, and to some extent electrolyte water, may penetrate the exterior (e.g. front and back) surfaces of the flow-through electrode and enter a gas collection region (e.g. 14, 16, 18, 314) of the electrode.

In some examples, the porous structure may be made of a "solid" porous part, preferably a solid porous disk. This solid porous disk has a unitary porosity throughout and differs from the example shown in FIGs. 8A and 8B particularly in that there is no hollow chamber that may act as the gas collection region. Rather, any part of the solid porous structure behind the first and second exterior surfaces may then act as the gas collection region, similar to the second layer and intermediate layers 14, 16, 18 shown in FIGs. 1A and 1B, except that the porous structure of this example has a single porosity.

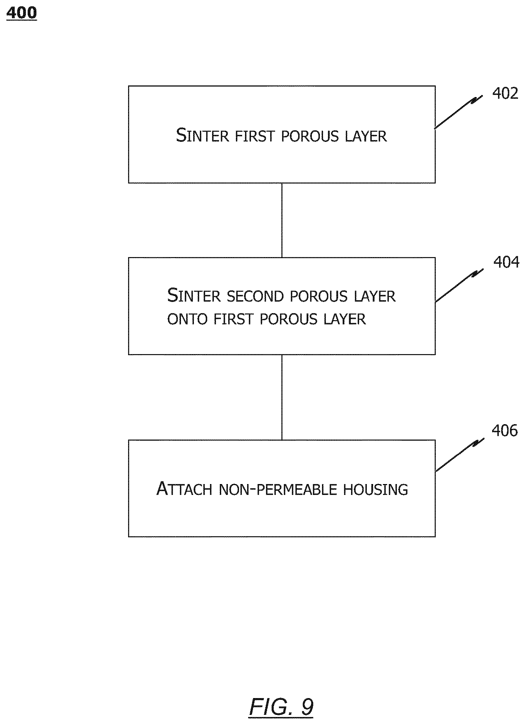

FIG. 9 shows a schematic flow diagram of a method for manufacturing a flow-through electrode according to the example shown in FIGs. 3 to 5. In a first step 402, a first porous layer is sintered with a first porosity. To this end, the first porous layer may be made of fine metal particles, such as nickel, titanium or nickel/titanium alloys. In some examples, such fine metal particles may be waste metal powder left over from metal 3D printing processes.

Using fine particles to sinter the first porous layer will achieve a first layer with small pore sizes and thus a comparatively low porosity.

In a second step 404, a second porous layer is sintered directly onto the first porous layer. The second porous layer is sintered with a higher porosity than the first layer, i.e., with larger pore sizes. To this end, the second porous layer may be sintered using nickel, titanium or nickel/titanium alloys. In some examples, the second porous layer may be made of swarf left over from machining processes. Due to the typically larger particle size of the swarf than the 3D printing powder, the sintered second porous layer will comprise larger pore sizes and thus a higher porosity than the first porous layer.

Optionally, a third porous layer may be sintered onto the second porous layer, opposite to the first porous layer. The third porous layer may be made of fine metal particles, such as nickel, titanium or nickel/titanium alloys. In some examples, such fine metal particles may be waste metal powder left over from metal 3D printing processes. The third porous layer may have substantially the same porosity as the first porous layer.

Due to the use of waste materials from 3D printing and machining, the above method is particularly environmentally friendly and cost effective.

Once the first, second (and optionally third) porous layers have been sintered, a non-permeable housing is attached to the layered porous structure in a third step 406. Similar to the porous layers, the non-permeable housing may be made of nickel, titanium, or nickel/titanium alloys. The non-permeable housing may be cast around the circumference of the layered porous structure. Alternatively, the non-permeable housing may be produced separately and attached to the layered porous structure in a separate step, e.g. by means of welding.

In other steps not shown in FIG. 9, the method may further include introducing first and second gas collection openings and first and second electrolyte collection openings introduced into the porous structure, once the porous layers have been sintered and attached with each other. In some examples, the openings may be drilled perpendicularly through the layered porous structure, as shown in FIGs. 1A, 1B, 8A, 8B. The openings may then be provided with porous and non-porous pipe inserts described above.

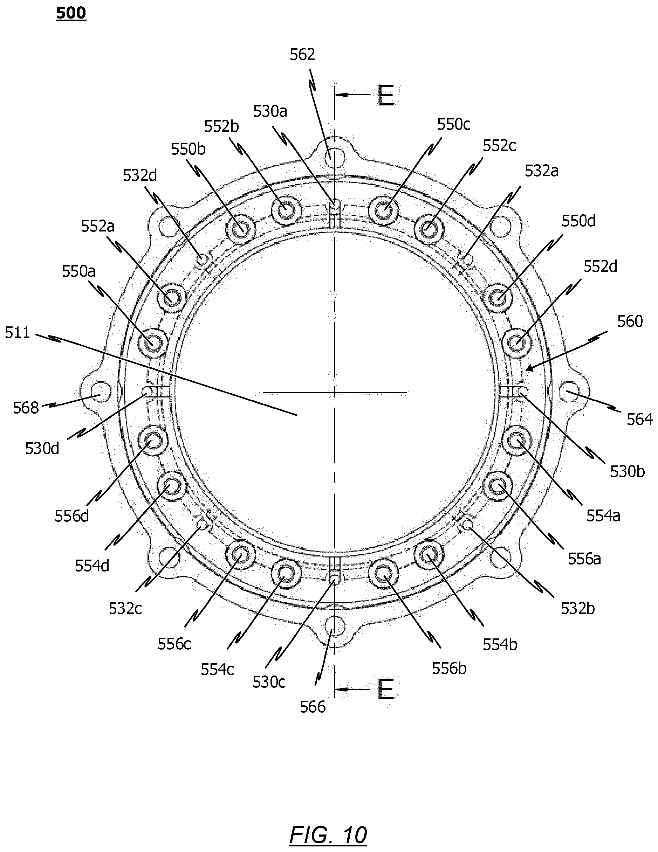

The embodiment described above, particularly the electrode stack shown in FIGs. 6 and 7 is a uni-polar electrode stack for the electrolysis of water. However, the present disclosure is not limited to electrodes for a uni-polar electrode stack. Rather, as shown in FIGs. 10 to 14, the present disclosure is also applicable for electrode stacks in a bi-polar arrangement.

Similar to the electrode 100 shown in FIG. 4, the electrode assembly 500 shown in FIGs. 10 to 12 is of a design that can be used repeatedly in an electrode stack to provide both anode and cathode electrodes without having to change the design of the assembly.

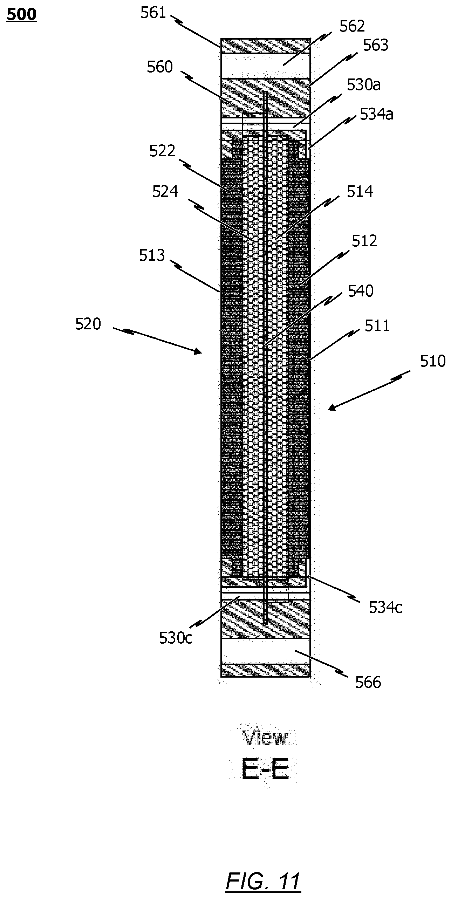

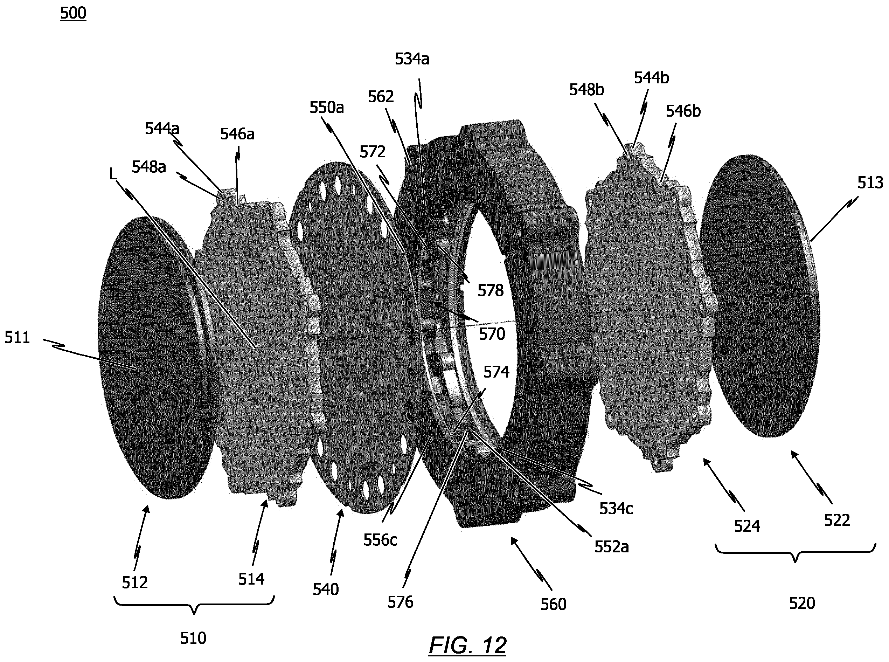

The electrode assembly 500 shown in FIGs. 10 to 12 comprises a housing 560 configured to receive two flow-through electrodes separated by a non-permeable part, as is derivable from FIGs. 11 and 12 for example.

The electrode assembly 500 comprises a first flow-through electrode 510 and a second flow-through electrode 520. The first and second flow-through electrodes 510, 520 are separated by a non-permeable divider 540. The non-permeable divider 540 may be made of any material suitable to stop fluids from moving between the first and second flow-through electrodes 510, 520. However, as will be explained in more detail below, the non-permeable divider 540 conducts electricity to enable the bi-polar arrangement within the stack. In one example, the non-permeable divider may be made of stainless steel.

The first electrode shown in FIG. 10 is a multi-layer electrode, similar to the electrode 10 shown in FIGs. 1A and 1B. In particular, in the embodiment of FIGs. 10 to 12, the first electrode comprises a first porous layer 512 and a second porous layer 514. The porous layers 512, 514 of the first electrode 510 have different porosities. In the example of FIG. 11, the porosity of the second porous layer 514 is larger than the porosity of the first porous layer 512. In other words, the second porous layer 514 may have more or larger voids than the first porous layer 512. In one example, the pore size of the second porous layer 514 may be larger than the pore size of the first porous layer 512 of the first electrode 510.

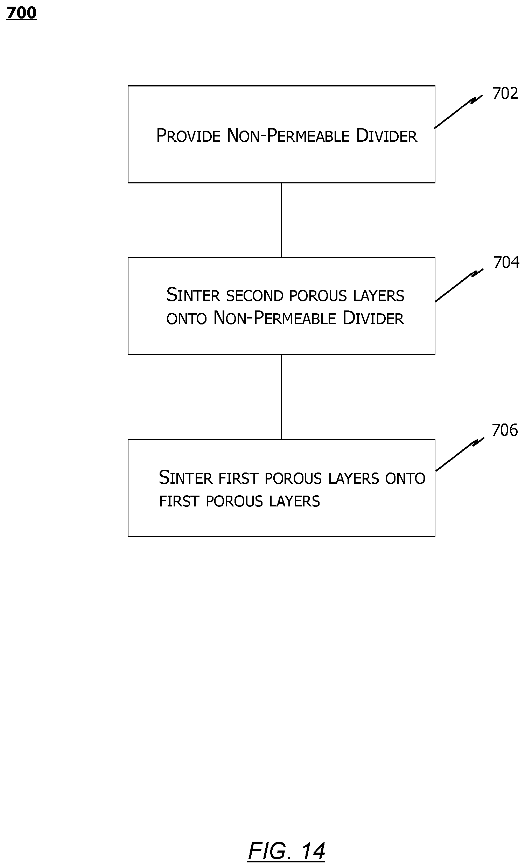

The first electrode 510 has a first surface 511 and an opposite, second surface. The first surface 511 faces away from the divider 540, whereas the second surface of the first electrode 510 is in contact with the divider 540. The first surface 511 is part of the first porous layer 512, whereas the second surface is part of the second porous layer 514. In the example of FIG. 11, the second surface of the first electrode 510 may be sintered onto the divider 540, as will be explained in more detail with respect to FIG. 14.

The electrode assembly 500 is configured such that the first surface 511 of the first electrode 510 is substantially flush with a corresponding first surface 561 of the housing 560. However, in some arrangements, especially if no further spacer is provided between adjacent electrode assemblies, the first surface 511 of the first electrode 510 may be recessed relative to the first surface 561 of the housing by a distance that is half the width of a desired cell gap between adjacent electrode assemblies.

Both the first porous layer and the second porous layer 512, 514 are permeable to gases produced by the decomposition of a process solution, such as water or electrolyte water. The first and second layers 512, 514 of the first electrode 510 may also be permeable to the process solution, i.e., water or electrolyte water, itself.

The second electrode 520 is also a multi-layer electrode. In particular, in the embodiment of FIGs. 10 to 12, the second electrode 520 comprises a first porous layer 522 and a second porous layer 524. The porous layers 522, 524 of the second electrode 520 have different porosities. In the example of FIG. 11, the porosity of the second porous layer 524 is larger than the porosity of the first porous layer 522. In other words, the second porous layer 524 may have more or larger voids than the first porous layer 522. In one example, the pore size of the second porous layer 524 may be larger than the pore size of the first porous layer 522 of the second electrode 520.

The second electrode 520 has a first surface 513 and an opposite, second surface. The first surface 513 faces away from the divider 540, whereas the second surface of the second electrode 520 is in contact with the divider 540. The first surface 513 is part of the first porous layer 522, whereas the second surface is part of the second porous layer 524. In the example of FIG. 11, the second surface of the second electrode 520 may be sintered onto the divider 540.

The electrode assembly 500 is configured such that the first surface 513 of the second electrode 520 is substantially flush with a corresponding second surface 563 of the housing 560. However, in some arrangements, especially if no further spacer is provided between adjacent electrode assemblies, the first surface 513 of the second electrode may be recessed relative to the second surface 563 of the housing by a distance that is half the width of a desired cell gap between adjacent electrode assemblies.

Both the first porous layer and the second porous layer 522, 524 are permeable to gases produced by the decomposition of a process solution, such as water or electrolyte water. The first and second layers 522, 524 of the first electrode 520 may also be permeable to the process solution, i.e., water or electrolyte water, itself.

In the embodiment shown in FIG. 11, both the first electrode and the second electrode 510, 520 have an identical design to reduce the number of moulds required to produce the electrodes of the electrode assembly 500. It should be understood, however, that the first and second electrodes 510, 520 are arranged within the housing in a circumferentially offset manner. In other words, the first and second electrodes 510, 520 are rotated with respect to each other to be connected with different outlet openings of the housing 560.

FIGs. 10 and 11 further show that the electrode assembly comprises a plurality of electrolyte water channels 530a, 530b, 530c, 530d, 532a, 532b, 532c, 532d for providing process fluids, such as water or electrolyte water, to the electrodes 510, 520 for the electrolysis process. In more detail, the electrode assembly 510 comprises a plurality of first electrolyte water channels 530a to 530d for providing process fluids to the first electrode 510. Two of the first electrolyte water channels 530a, 530c are shown in the cross section in FIG. 11.

Each of the plurality of first electrolyte water channels 530a to 530d is connected to the first electrode 510 via connection ducts, such as the two connection ducts 544a, 544c shown in FIG. 11. The connection ducts 544a, 544c connecting each of the first electrolyte water channels 530a to 530d to the first electrode 510 are configured as radial grooves on the first surface 561 of the housing 560. The radial grooves extend in a radially inward direction from the electrolyte water channels 530a to 530d towards the first electrode.

The electrode assembly 510 comprises a plurality of second electrolyte water channels 532a to 532d for providing process fluids to the second electrode 520.

Each of the plurality of second electrolyte water channels 532a to 532d is connected to the second electrode 520 via connection ducts (not shown). The connection ducts connecting each of the second electrolyte water channels 532a to 532d to the second electrode 520 are configured as radial grooves on the second surface 563 of the housing 560. The radial grooves extend in a radially inward direction from the electrolyte water channels 532a to 532d towards the second electrode 520.

The first and second electrolyte water channels 530a to 530d, 532a to 532d are arranged on the first and second surface 561, 563 of the housing 560 in a circular manner. The first and second electrolyte water channels extend from the first to the second surface 561, 563 of the housing 560, in parallel with the longitudinal axis L of the electrode assembly 500.

The plurality of first and second electrolyte water channels 530a to 530d, 532a to 532d are arranged alternatingly around the first and second surface of the housing 560. In other words, one first electrolyte water channel is always interspersed between two of the second electrolyte water channels and vice versa.

In view of the above, the electrode assembly 500 of the present invention allows for different process fluids to be delivered to the first and second electrodes 510, 520. As will be described in more detail below, if the first electrode 510 acts as an anode, then the second electrode 520 will function as a cathode and vice versa. It is thus possible with the electrode design shown in FIGs. 10 to 12 that one type of process fluid is provided to the anode electrodes only (e.g. via the first electrolyte water channels), whereas another type of process fluids is provided to the cathodes (e.g. via the second electrolyte water channels) of the electrode stack.

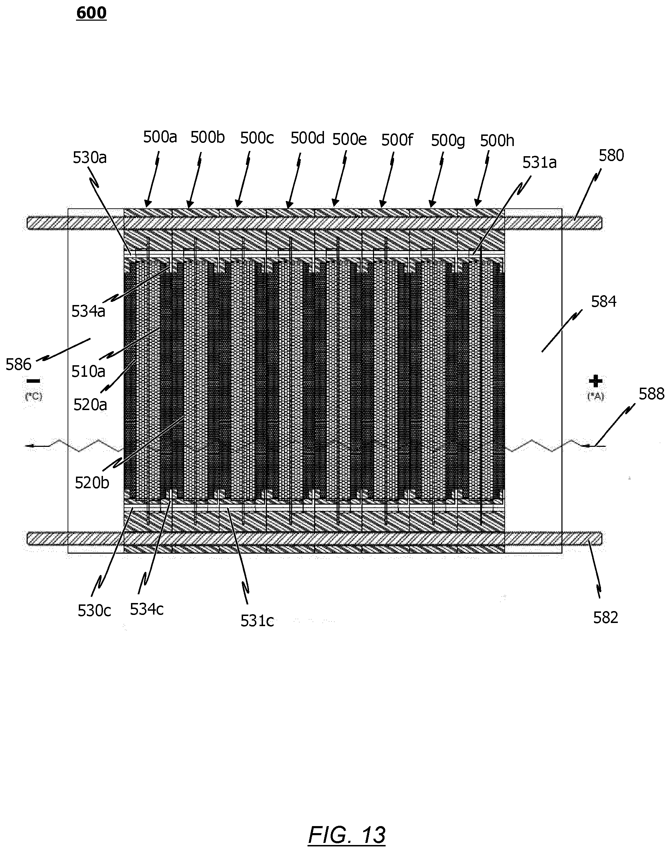

As will be described in more detail with respect to FIG. 13, the electrolyte water channels 530a to 530d, 532a to 532d of one electrode assembly 500 may interact with the corresponding channels of an adjacent electrode assembly to form a plurality of first electrode water galleries for supplying the first electrodes, e.g., the anode electrodes with a first process fluid, whereas the second electrolyte water channels may be connected to form a plurality of second electrolyte water galleries for supplying the second electrodes, e.g., the cathode electrodes with a different type of electrolyte water. In some examples, electrolyte water supplied to the first electrodes may be recycled and re-supplied to the first electrodes, whereas electrolyte water supplied to the second electrodes may be recycled for the second electrodes. In this way, the first electrodes may be supplied with electrolyte water that is already enriched in oxygen, whereas the second electrodes may be supplied with electrolyte water that is already enriched with hydrogen.

The electrode assembly 500 comprises a plurality of first gas collection openings 550a to 550d. The electrode assembly 500 also comprises a plurality of second gas collection openings 552a to 552d. The first and second gas collection openings 550a to 550d, 552a to 552d are arranged in a half-circle on the first and second surface 561, 563 of the housing 560. In particular, the first and second gas collection openings 550a to 550d, 552a to 552d are through holes extending between the first and second surfaces 561, 563 of the housing 560. The first and second gas collection openings 550a to 550d, 552a to 552d are openings that arranged on the uppermost half-circle in Figure 10. However, as will be appreciated this will no longer be the case when the electrode assembly 500 is inserted into the electrode stack, as the stack is preferably arranged in a vertical manner, i.e. several electrode assemblies stacked on top of each other. The first and second gas collection openings 550a to 550d, 552a to 552d are arranged alternatingly on the half-circle shown in FIG. 10. In other words, a first gas collection opening 550a to 550d is always interspersed between two of the second gas collection openings 552a to 552d and vice versa.

The electrode assembly also comprises a plurality of first electrolyte collection openings 554a to 554d and a plurality of second electrolyte collection openings 556a to 556d. The first and second electrolyte collection openings 554a to 554d, 556a to 556d are arranged in a half-circle at a lower end of the electrolyte assembly 500. The first and second electrolyte collection openings 554a to 554d, 556a to 556d are arranged alternatingly on the half-circle shown in FIG. 10. In other words, a first electrolyte collection opening 554a to 554d is always interspersed between two of the second electrolyte collection openings 556a to 556d and vice versa.

The first gas collection openings 550a to 550d are provided to receive gases produced by the decomposition of the process fluid by the first flow-through electrode, whereas the second gas collection openings 552a to 552d are provided to receive gas produced by the decomposition of process fluid at the second electrode 520. Similarly, the first electrolyte water collection openings 554a to 554d are arranged to receive electrolyte water that needs to be drained from the first electrode 510, whereas the second electrolyte collection openings 556a to 556d are provided to receive electrolyte water drained from the second electrode 520.

The arrangement of the first and second electrode 510, 520 with respect to the housing 560 and thus with respect to the respective gas and electrolyte collection openings is best understood in view of FIG. 12. FIG. 12 shows an exploded view of the electrode assembly 500 according to this embodiment of the present invention. In particular, FIG. 12 shows the first and second layers 512, 514 of the first electrode 510 and the first and second layers 522, 524 of the second electrode distanced from each other and the housing 560 to appreciate the positioning of the second layers 514, 524 of the first and second electrodes 510, 520 with respect to each other within the electrode assembly 500.

As mentioned previously, both the first and the second electrodes 510, 520 are substantially produced in the same manner. In particular, the first layers 512, 522 are disc shaped and include a shoulder portion, which, as is derivable from FIG. 11, can be used to hold the first and second electrodes within the central opening of the housing 560. The second layers 514, 524 of the first and second electrodes are also substantially disc shaped. However, the second layers 514, 524 both include a plurality of lugs extending radially outwards from the circumference of the disc shaped second layers 514, 524. The lugs (e.g. 544a and 544b) of the second layers 514, 524 each include one outlet opening 548a, 548b. Each of the outlet openings 548a, 548b is aligned with one of the gas collection openings or one of the electrolyte collection openings of the housing 560. It should be noted that each of the lugs 544a, 544b and their corresponding outlet openings 548a, 548b are exclusively aligned with one of the collection openings of the housing 560, that is none of the collection openings of the housing 560 are aligned with two outlet openings.

The housing 560 comprises an alignment collar 570 with first and second protrusions that protrude radially inwardly towards the central opening of the housing 560. In detail, a first set of protrusions 574 is configured to engage corresponding recesses 546a of the second layer 514 of the first electrode 510. A second plurality of protrusions 578 arranged within the housing 560 are configured to engage with a plurality of recesses 546b of the second layer 524 of the second electrode 520. The plurality of first protrusions 574 are circumferentially offset from the plurality of second protrusions 578. Due to this circumferential offset, the second layers 514, 524 of the first and second electrodes will also be radially offset from each other when they are received within the housing. In other words, when the electrodes are inserted into the housing, recesses 546a of the second layer 514 of the first electrode are aligned with the lugs 544b of the second layer 524 of the second electrode 520 and vice versa.

The alignment collar 570 misaligns the lugs and recesses of the second layers 514, 524 with respect to each other but aligns each of the lugs 544a, 544b of the second layers 514, 524 with one of the collection openings of the housing 560.

By way of example, a first lug 544a may be inserted into a first recess 572 of the alignment collar 570, such that the corresponding outlet opening 548a of the lug 544a is aligned with the first gas collection opening 550a of the housing. The remaining lugs of the second layer 514 of the first electrodes are then received in corresponding other first recesses and thus act to align the first gas collection openings and the first electrolyte collection openings with a respective lug 544a of the second layer 514.

Similarly, a first lug 544b of the second electrode 520 may be inserted into a second recess 576 of the alignment collar 570, such that the corresponding outlet opening 548b of the lug 544b is aligned with a second gas collection opening 552a of the housing. The remaining lugs of the second layer 524 of the second electrode are then received in corresponding other second recesses and thus act to align the second gas collection openings and the second electrolyte collection openings with a respective lug 544b of the second layer 524.

Due to the aforementioned arrangement of the electrodes within the housing 560, gases produced by the decomposition of electrolyte water within the first and second electrodes may travel towards the respective lugs 544a, 544b of the second layers 514, 524 and enter the gas collection openings 550a to 550d, 552a to 552d of the housing 560 via the outlet openings of the lugs. It should be understood that gases produced in the first electrode may not enter the second gas collection openings 552a to 552d of the housing 560, whereas gases produced in the second electrode 520 may in turn not enter the first gas collection openings 550a to 550d.

Turning to FIG. 13, there is shown an electrode stack according to an embodiment of the present invention. The electrode stack 600 comprises a plurality of electrode assemblies 500a to 500h stacked together to form the electrode stack 600. Although FIG. 13 shows a horizontal arrangement of the electrode stack 600, this is for ease of illustration only. In a preferred embodiment, the electrode assemblies of the present invention are stacked in a vertical direction, such that the stack shown in FIG. 13 is indeed turned by 90°. When stacked in a vertical direction, the electric power supply is connected in such a way that the Cathode electrodes will be arranged above adjacent Anode electrodes in the stack. In other words, the top most electrode will be a Cathode electrode.

At a first end, the stack 600 is covered by a first end plate 584. At an opposite, second end, the stack is covered by a second end plate 586. In order to connect the electrode assemblies 500 and the end plates with each other, each of the electrode assemblies 500a to 500h and the end plates 584, 586 include a plurality of mounting holes 562, 564, 566, 568 (FIG. 10) extending around the circumference of the electrode assemblies 500 and the cover plates 584, 586. Mounting rods 580, 582, for example threaded bolts, extend through the mounting holes to secure the stack and align the individual electrode assemblies 500a to 500h with each other.

In the exemplary electrode stack 600 shown in FIG. 13, a first electrode assembly 500a is arranged adjacent to a second electrode assembly 500b. The second electrode assembly 500b is arranged adjacent to a third electrode assembly 500c etc. Each of the electrode assemblies 500a to 500h is designed as shown in Figures 10 to 12.

The first electrode assembly 500a is arranged within the stack, such that the first electrode 510a is arranged adjacent to a second electrode 520b of the second electrode assembly 500b. In more detail, the first surface of the first electrode 510a of the first electrode assembly 500a faces the first surface of the second electrode 520b of the second electrode assembly 500b. As shown in FIG. 13, the first surfaces of the first electrode 510a, 520b may be in contact with each other. However, in some alternative embodiments, there may also be a gap between the first surfaces of the first electrode 510a of the first electrode assembly 500a and the first surface of the second electrode 520b of the second electrode assembly 500b. This gap may be used to provide electrolyte water to both the first electrode 510a and the second electrode 520b via their respective first surfaces. The gap may be created via an O-ring arranged at an O-groove (not shown) arranged on the first surface of the housing 560. This O-ring may thus act as a spacer to create defined gaps between the first and second electrodes of adjacent electrode assemblies.

In other embodiments described above, the first and second electrodes 510, 520 may be recessed from the first and second surfaces 561, 563 of the housing, to provide for the above gap between adjacent electrode assemblies without the need for an O-ring spacer.

Electrodes of adjacent electrode assemblies 500a to 500h may be separated by an electrolyte membrane or a diaphragm, which avoids mixing of the hydrogen oxygen produced at the cathode or anode electrodes.

As mentioned previously, the electrode stack 600 shown in FIG. 13 is a bi-polar electrode stack. In other words, the electrode assemblies 500a to 500h of the electrode stack 600 are connected electrically in series, rather than in parallel as is the case for the uni-polar stack 200 described with reference to FIGs. 6 and 7 above. In the example of FIG. 13, a positive terminal is connected to the first end cover 584, whereas a negative terminal is connected to the second end cover 586. In this configuration, each of this first electrodes (e.g., 510a) of each electrode assembly 500a to 500h has a positive charge and thus acts as an anode electrode. Similarly, each of the second electrodes 520a, 520b of each of the electrode assemblies 500a to 500h is negatively charged and thus acts as a cathode electrode. It follows that in the electrode stack 600 of the present disclosure, each electrode assembly 500a to 500h provides one anode electrode and one cathode electrode separated by a non-permeable divider 540. In a vertical orientation of the stack, it is preferred to arrange the first end plate 584 on top of the stack such that the second electrodes 520 (Cathode electrodes) will be arranged on top of the first electrodes 510 (Anode electrodes).

FIG. 13 shows two (first) electrolyte water supply galleries 531a, 531c extending through the electrode assemblies 500a to 500h. Each of the electrolyte water supply galleries 531a, 531c is made up of aligned first electrolyte water channels 530a, 530c. In other words, as described above, each of the plurality of first electrolyte water channels 530a to 530d creates a first electrolyte water gallery, whereas each of the plurality of second electrolyte water channels 532a to 532d create a respective second electrolyte water supply gallery (not shown).

The first electrolyte water galleries 531a, 531c are configured to supply electrolyte water to the first electrodes 510a of each of the electrode assemblies 500a to 500h via respective connection ducts 534a, 534c. In the embodiment of FIG. 13, the connection ducts 534a, 534c connect the electrolyte water channels 540a, 540c with an outer circumferential surface of the first layer of the first electrodes. Electrolyte water supplied in this way may thus enter the first electrodes radially into the first layer.

In other embodiments, e.g., when adjacent electrode assemblies are spaced from each other by a gap, electrolyte water may be introduced into the gap and thus enter the first layer of the first electrode via its front face, e.g. the first surface 511.

Although this is not explicitly shown in the cross section of FIG. 13, each of the second electrolyte water channels 532a to 532d create a second electrolyte water gallery together with second electrolyte water channels of the other electrode assemblies 500a to 500h of the stack. The second galleries are arranged in a similar way to the first galleries 531a, 531c shown in FIG. 13. However, the second galleries include connection ducts, which extend between the second electrolyte water channels and the first layer of the second electrodes of each electrode assembly. Accordingly, electrolyte water may be introduced via the second galleries into the first layer of the second electrodes of each electrode assembly 500a to 500h. Similar to the first electrolyte water supply galleries 531a, 531c, the electrolyte water may be introduced radially into the first layers of the second electrodes or, alternatively, via the first surface 513 of the second electrode, if a gap exists between adjacent electrode assemblies 500a to 500h.

If a gap exists between adjacent electrode assemblies 500a to 500h, a non-permeable membrane may be arranged within the gap to avoid mixture of the gases produced at adjacent first and second electrodes. The non-permeable membrane also allows for two different process fluids to be used within the gap. A first process fluid may be used to supply the first electrode, whereas a second process fluid may be supplied via the second electrolyte water gallery to supply the opposite, second electrode of the adjacent electrode assembly. One example of a suitable membrane is a Polymer based material such as PTFE. In some embodiments, the non-permeable membrane is not permeable to Oxygen gas but allows OH⁻ ions to pass through the membrane.

As has been described with reference to FIG. 12, electrolyte water being applied to the first layers of the first or second electrodes will be at least partly decomposed into gases, such as hydrogen and oxygen, which then travel through the second layer and out of the outlet openings of the second layers of each electrode via the corresponding first or second gas collection openings of the housing 560.

FIG. 14 shows a schematic flow diagram of a method 700 for manufacturing an electrode assembly according to the example shown in FIGs. 10 to 12. In a first step 702, a non-permeable divider is provided. This divider may essentially be of any structure that is non-permeable to the process fluids and the gases received within the first and second electrodes. However, the non-permeable divider is required to be electrically conductive. In one embodiment, the non-permeable divider may be made of a steel disc.

In a second step 704, the second porous layers of both electrodes are sintered directly onto the non-permeable divider. The second porous layer may be sintered using nickel, titanium or nickel-titanium alloys. In one example, the second porous layer may be made of swarf leftover from machining processes.

In another step 706, the first layers of the first and second electrodes are sintered onto the second porous layers. The first porous layers may be made of fine metal particles, such as nickel, titanium or nickel-titanium alloys. Such fine metal particles may be razed metal powder leftover from metal 3D printing processes.

Preferences and options for a given aspect, feature or parameter of the disclosure should, unless the context indicates otherwise, be regarded as having been disclosed in combination with any and all preferences and options for all other aspects, features and parameters of the disclosure. In particular, this disclosure is not limited to the use of the electrodes and electrode stack for water electrolysis. Rather, various other process fluids may be decomposed by means of the electrodes and electrode stack disclosed hereinbefore.

The following clauses relate to further, non-claimed examples of the present disclosure.
1. An electrode stack comprising:
   - a first flow-through electrode having a gas collection region arranged between first and second surfaces of the first flow-through electrode;
   - a second flow-through electrode having a gas collection region arranged between first and second surfaces of the second flow-through electrode;
   - a first electrolyte chamber extending between the second surface of the first flow-through electrode and the first surface of the second flow-through electrode.
2. The electrode stack of Clause 1, wherein the first and/or second surface of the first flow-through electrode is permeable to gases produced by the decomposition of water, and/or wherein the first and/or second surface of the second flow-through electrode is permeable to gases produced by the decomposition of water.
3. The electrode stack of Clause 1 or 2, comprising a gasket arranged between the first and second flow-through electrodes, said gasket acting as a spacer between the first and second flow-through electrodes for creating a cell gap defining the first electrolyte chamber.
4. The electrode stack of Clause 3, wherein the first and second flow-through electrodes are biased towards each other.
5. The electrode stack of any one of Clauses 1 to 4, wherein the first and second flow-through electrodes are substantially disc-shaped.
6. The electrode stack of any one of Clauses 1 to 5, wherein the gas collection region of the first flow-through electrode is connectable to a first gas collection chamber, and wherein the gas collection region of the second flow-through electrode is connectable to a second gas collection chamber.
7. The electrode stack of any one of Clauses 1 to 6, comprising a first gas collection conduit for connecting the gas collection region of the first flow-through electrode with a first gas collection chamber, and a second gas collection conduit for connecting the gas collection region of the second flow-through electrode with a second gas collection chamber.
8. The electrode stack of any one of Clauses 1 to 7, comprising
   a third flow-through electrode having a gas collection region arranged between first and second surfaces of the third flow-through electrode, and
   a second electrolyte chamber extending between the second surface of the second flow-through electrode and the first surface of the third flow-through electrode.
9. The electrode stack of Clause 8, comprising a gasket arranged between the second and third flow-through electrodes, said gasket acting as a spacer between the second and third flow-through electrodes for creating a cell gap defining the second electrolyte chamber.
10. The electrode stack of any one of clauses 1 to 9, wherein the first flow-through electrode comprises a non-permeable channel extending thorough the first flow-through electrode via its first and second surfaces, and/or wherein the second flow-through electrode comprises a non-permeable channel extending thorough the second flow-through electrode via its first and second surfaces.
11. An electrolyser for generating hydrogen from water, said electrolyser comprising:
   - an electrode stack according to any one of Clauses 1 to 10;
   - a first gas collection chamber for collecting gases produced by the decomposition of electrolyte water;
   - a second gas collection chamber for collecting gases produced by the decomposition of electrolyte water,
   wherein the gas collection region of the first flow-through electrode is connected to the first gas collection chamber, and wherein the gas collection region of the second flow-through electrode is connected to the second gas collection chamber.
12. A flow-through electrode for electrolysis of water, said electrode comprising:
   - a first porous layer permeable to gases produced by the decomposition of electrolyte water;
   - a second porous layer permeable to gases produced by the decomposition of electrolyte water, said second porous layer being arranged adjacent to the first porous layer;
   wherein the second porous layer has a larger porosity than the first porous layer.
13. The electrode of Clause 12, wherein an average pore size of pores in the second porous layer is larger than an average size of pores in the first porous layer.
14. The electrode of Clause 12 or 13, comprising a third porous layer permeable to gases produced by the decomposition of electrolyte water, said third porous layer being arranged adjacent to the second porous layer, opposite the first porous layer.
15. The electrode of Clause 14, wherein the second porous layer has a larger porosity than the third porous layer.
16. The electrode of Clause 14 or 15, wherein the third porous layer has a porosity that is substantially identical to the porosity of the first porous layer.
17. The electrode of any one of Clauses 14 to 16, wherein an average pore size of pores in the third porous layer is substantially identical to an average size of pores in the first porous layer.
18. The electrode of any one of Clauses 12 to 17, wherein the first and second porous layers are sintered layers, preferably made by field-assisted sintering.
19. The electrode of any one of Clauses 1 to 18, wherein the first and second porous layers are made from different raw product.
20. The electrode of any one of Clauses 1 to 19, wherein the first porous layer is made from sintered powder material, and wherein the second porous layer is made from sintered swarf.
21. The electrode of any one of Clauses 1 to 20, wherein the first and second porous layers are made from Nickel and/or Titanium and/or alloys of Nickel and Titanium.
22. The electrode of Clause any one of Clauses 1 to 21, wherein the second layer is connected to a gas outlet for removing gas produced during electrolysis of water from the electrode.
23. The electrode of Clause any one of Clauses 1 to 22, wherein the first porous layer has a first, preferably flat, surface opposite the second porous layers, said first surface being an outer surface of the electrode, and wherein said outer surface faces an electrolyte chamber, when in use.
24. An electrode stack comprising:
   - a first electrode according to any one of Clauses 1 to 23;
   - a second electrode according to any one of Clauses 1 to 23; and
   - an electrolyte chamber extending between the first porous layers of the first and second electrode.
25. The electrode stack of Clause 24, wherein the electrolyte chamber is membrane-free.
26. An electrolyser for generating hydrogen from water, said electrolyser comprising:
   - an electrode stack according to Clause 24 or 25;
   - an electrolyte supply circuit for supplying pressurised electrolyte water to the electrolyte chamber of the electrode stack;
   - an electric power supply comprising a positive terminal and a negative terminal, wherein the positive terminal is connected to the first electrode and the negative terminal is connected to the second electrode.
27. A method of manufacturing a flow-through electrode for electrolysis of water comprising:
   - sintering a first porous layer made of a first material;
   - sintering a second porous layer made of a second material onto the first porous layer;
   wherein the first and second materials are chosen such that the second porous layer has a larger porosity than the first porous layer.
28. The method of Clause 27, wherein the first material comprises a metal powder, preferably a 3D printing waste metal powder.
29. The method of Clause 28 or 29, wherein the second material comprises metal swarf, preferably machining waste swarf.
30. An electrode for electrolysis of water, said electrode comprising a porous structure, said porous structure comprising:
   - a first porous surface permeable to gases produced by the decomposition of electrolyte water;
   - a first gas collection opening configured for collecting gases produced by the electrode,
   wherein the first gas collection opening extends through the porous structure such that gases penetrating the first porous surface may leave the porous structure via the first gas collection opening.
31. The electrode of Clause 30, wherein the porous structure comprises a second gas collection opening, which extends through the electrode in parallel with the first gas collection opening and is configured for collecting gases produced by the porous structure, wherein the second gas collection opening extends through the porous structure such that gases penetrating the first porous layer may leave the porous structure via the second gas collection opening.
32. The electrode of Clause 31, wherein the porous structure is symmetrical about a symmetry axis, and wherein the first gas collection opening and the second gas collection opening are mirror images of each other arranged on opposite sides of said symmetry axis.
33. The electrode of any one of Clauses 30 to 32, wherein the first gas collection opening is a through hole, said through hole preferably comprising a porous side wall.
34. The electrode of any one of Clauses 30 to 33, comprising a porous insert received within the first gas collection opening.
35. The electrode of any one of Clauses 30 to 34, when dependent on Clause 31, comprising a non-porous insert received within the second gas collection opening.
36. The electrode of any one of Clauses 30 to 35, wherein the porous structure comprises a first electrolyte collection opening, which extends through the porous structure and is configured for collecting electrolyte water that penetrated the first porous surface, wherein the first electrolyte collection opening extends through the porous structure such that electrolyte water penetrating the first porous layer may leave the porous structure via the first electrolyte collection opening.
37. The electrode of Clause 36, wherein the first electrolyte opening is arranged in the porous structure such that the first electrolyte collection opening extends through a lower half of the porous structure, when in use.
38. The electrode of Clause 36 or 37, wherein the porous structure is symmetrical about a symmetry axis, and wherein the first gas collection opening and the first electrolyte collection opening are mirror images of each other.
39. The electrode of any one of Clauses 36 to 38, wherein the porous structure comprises a second electrolyte collection opening, which extends through the porous structure and is configured for collecting electrolyte water penetrating the first porous surface, wherein the second electrolyte collection opening extends through the porous structure such that electrolyte water penetrating the first porous surface may leave the porous structure via the second electrolyte collection opening.
40. The electrode of Clause 39, wherein the porous structure is symmetrical about a symmetry axis, and wherein the first electrolyte collection opening and the second electrolyte collection opening are mirror images of each other.
41. The electrode of any one of Clauses 30 to 40, wherein the first surface of the porous structure is part of a first porous layer, and wherein the porous structure comprises a second porous layer permeable to gases produced by the decomposition of electrolyte water and arranged adjacent to the first porous layer, wherein the second porous layer has a larger porosity than the first porous layer.
42. The electrode of Clause 41, wherein the first opening extends through the second porous layer.
43. The electrode of Clause 41 or 42, wherein the porous structure comprises a third porous layer permeable to gases produced by the decomposition of electrolyte water and arranged adjacent to the second porous layer, the third porous layer comprising a substantially identical porosity to the first porous layer, wherein the second porous layer is preferably sandwiched between the first and third porous layers.
44. The electrode of any one of Clauses 30 to 43, wherein the electrode comprises a non-permeable channel extending thorough the porous structure.
45. The electrode of any one of Clauses 30 to 44, comprising a non-porous housing surrounding at least a part of the porous structure.
46. An electrode stack comprising:
   - a first electrode according to any one of Clauses 30 to 45;
   - a second electrode according to any one of Clauses 30 to 45; and
   - an electrolyte chamber extending between the porous structures of the first and second electrodes.
47. The electrode stack of Clause 46, when dependent on Clause 31, wherein the first and second electrodes are arranged with respect to each other such that the first gas collection openings of the first and second electrodes are axially aligned with one another.
48. The electrode stack of Clause 46 or 47, comprising a gasket arranged between the first and second electrodes, said gasket acting as a spacer between the first and second electrode for creating a cell gap defining the electrolyte chamber.
49. The electrode stack of Clause 48, wherein the gasket comprises a first gasket opening, said gasket being axially aligned with the first gas collection openings of the first and second electrode.
50. The electrode stack of any one of Clauses 46 to 49,
   wherein the porous structure of the first and second electrodes comprises a second porous layer permeable to gases produced by the decomposition of electrolyte water and arranged adjacent to the first porous layer, wherein the second porous layer has a larger porosity than the first porous layer,
   wherein the porous structure comprises a third porous layer permeable to gases produced by the decomposition of electrolyte water and arranged adjacent to the second porous layer, the third porous layer comprising a substantially identical porosity to the first porous layer, wherein the second porous layer is preferably sandwiched between the first and third porous layers, and
   wherein the electrolyte chamber extends between the third porous layer of the first electrode and the first porous layer of the second electrode.
51. The electrode stack of Clause 50, when dependent on Clause 48 or 49, wherein the gasket is arranged between the third porous layer of the first electrode and the first porous layer of the second electrode.
52. An electrolyser for generating hydrogen from water, said electrolyser comprising:
   - an electrode stack according to any one of Clauses 46 to 51;
   - an electrolyte supply circuit for supplying pressurised electrolyte water to the electrolyte chamber of the electrode stack;
   - an electric power supply comprising a positive terminal and a negative terminal, wherein the positive terminal is connected to the first electrode and the negative terminal is connected to the second electrode.
53. The electrolyser of Clause 52, comprising a control unit configured to control the electrolyte supply circuit such that a pressure of the electrolyte water supplied to the electrolyte chamber is above a gas outlet pressure of the electrolyser, preferably at least 5 bar above the gas outlet pressure of the electrolyser.

1a. An electrode stack comprising:
   - a first flow-through electrode having a gas collection region arranged between first and second surfaces of the first flow-through electrode;
   - a second flow-through electrode having a gas collection region arranged between first and second surfaces of the second flow-through electrode;
   a first electrolyte chamber extending between the second surface of the first flow-through electrode and the first surface of the second flow-through electrode
2a. The electrode stack of Claim 1a, wherein the first and/or second surface of the first flow-through electrode is permeable to gases produced by the decomposition of water, and/or wherein the first and/or second surface of the second flow-through electrode is permeable to gases produced by the decomposition of water.
3a. The electrode stack of Claim 1a or 2a, comprising a gasket arranged between the first and second flow-through electrodes, said gasket acting as a spacer between the first and second flow-through electrodes for creating a cell gap defining the first electrolyte chamber.
4a. The electrode stack of Claim 3a, wherein the first and second flow-through electrodes are biased towards each other.
5a. The electrode stack of any one of Claims 1a to 4a, wherein the first and second flow-through electrodes are substantially disc-shaped.
6a. The electrode stack of any one of Claims 1a to 5a, wherein the gas collection region of the first flow-through electrode is connectable to a first gas collection chamber, and wherein the gas collection region of the second flow-through electrode is connectable to a second gas collection chamber.
7a. The electrode stack of any one of Claims 1a to 6a, comprising a first gas collection conduit for connecting the gas collection region of the first flow-through electrode with a first gas collection chamber, and a second gas collection conduit for connecting the gas collection region of the second flow-through electrode with a second gas collection chamber.
8a. The electrode stack of any one of Claims 1a to 7a, comprising
   a third flow-through electrode having a gas collection region arranged between first and second surfaces of the third flow-through electrode, and
   a second electrolyte chamber extending between the second surface of the second flow-through electrode and the first surface of the third flow-through electrode.
9a. The electrode stack of Claim 8a, comprising a gasket arranged between the second and third flow-through electrodes, said gasket acting as a spacer between the second and third flow-through electrodes for creating a cell gap defining the second electrolyte chamber.
10a. The electrode stack of any one of claims 1a to 9a, wherein the first flow-through electrode comprises a non-permeable channel extending thorough the first flow-through electrode via its first and second surfaces, and/or wherein the second flow-through electrode comprises a non-permeable channel extending thorough the second flow-through electrode via its first and second surfaces.
11a. An electrolyser for generating hydrogen from water, said electrolyser comprising:
   - an electrode stack according to any one of Claims 1a to 10a;
   - a first gas collection chamber for collecting gases produced by the decomposition of electrolyte water;
   - a second gas collection chamber for collecting gases produced by the decomposition of electrolyte water,
   wherein the gas collection region of the first flow-through electrode is connected to the first gas collection chamber, and wherein the gas collection region of the second flow-through electrode is connected to the second gas collection chamber.
12a. A flow-through electrode for electrolysis of water, said electrode
   comprising:
   • a first porous layer permeable to gases produced by the decomposition of electrolyte water;
   • a second porous layer permeable to gases produced by the decomposition of electrolyte water, said second porous layer being arranged adjacent to the first porous layer;
   wherein the second porous layer has a larger porosity than the first porous layer.
13a. The electrode of Claim 12a, wherein an average pore size of pores in the second porous layer is larger than an average size of pores in the first porous layer.
14a. The electrode of Claim 12a or 13a, comprising a third porous layer permeable to gases produced by the decomposition of electrolyte water, said third porous layer being arranged adjacent to the second porous layer, opposite the first porous layer.
15a. The electrode of Claim 14a, wherein the second porous layer has a larger porosity than the third porous layer.
16a. The electrode of Claim 14a or 15a, wherein the third porous layer has a porosity that is substantially identical to the porosity of the first porous layer.
17a. The electrode of any one of Claims 14a to 16a, wherein an average pore size of pores in the third porous layer is substantially identical to an average size of pores in the first porous layer.
18a. The electrode of any one of Claims 12a to 17a, wherein the first and second porous layers are sintered layers, preferably made by field-assisted sintering.
19a. The electrode of any one of Claims 1a to 18a, wherein the first and second porous layers are made from different raw product.
20a. The electrode of any one of Claims 1a to 19, wherein the first porous layer is made from sintered powder material, and wherein the second porous layer is made from sintered swarf.
21a. The electrode of any one of Claims 1a to 20, wherein the first and second porous layers are made from Nickel and/or Titanium and/or alloys of Nickel and Titanium.
22a. The electrode of Claim any one of Claims 1a to 21, wherein the second layer is connected to a gas outlet for removing gas produced during electrolysis of water from the electrode.
23a. The electrode of Claim any one of Claims 1a to 22, wherein the first porous layer has a first, preferably flat, surface opposite the second porous layers, said first surface being an outer surface of the electrode, and wherein said outer surface faces an electrolyte chamber, when in use.
24a. An electrode stack comprising:
   - a first electrode according to any one of Claims 1a to 23a;
   - a second electrode according to any one of Claims 1a to 23a; and
   - an electrolyte chamber extending between the first porous layers of the first and second electrode.
25a. The electrode stack of Claim 24a, wherein the electrolyte chamber is membrane-free.
26a. An electrolyser for generating hydrogen from water, said electrolyser comprising:
   - an electrode stack according to Claim 24a or 25a;
   - an electrolyte supply circuit for supplying pressurised electrolyte water to the electrolyte chamber of the electrode stack;
   - an electric power supply comprising a positive terminal and a negative terminal, wherein the positive terminal is connected to the first electrode and the negative terminal is connected to the second electrode.
27a. A method of manufacturing a flow-through electrode for electrolysis of water comprising:
   - sintering a first porous layer made of a first material;
   - sintering a second porous layer made of a second material onto the first porous layer;
   wherein the first and second materials are chosen such that the second porous layer has a larger porosity than the first porous layer.
28a. The method of Claim 27a, wherein the first material comprises a metal powder, preferably a 3D printing waste metal powder.
29a. The method of Claim 28a or 29a, wherein the second material comprises metal swarf, preferably machining waste swarf.
30a. An electrode for electrolysis of water, said electrode comprising a porous structure, said porous structure comprising:
   - a first porous surface permeable to gases produced by the decomposition of electrolyte water;
   - a first gas collection opening configured for collecting gases produced by the electrode,
   wherein the first gas collection opening extends through the porous structure such that gases penetrating the first porous surface may leave the porous structure via the first gas collection opening.
31a. The electrode of Claim 30a, wherein the porous structure comprises a second gas collection opening, which extends through the electrode in parallel with the first gas collection opening and is configured for collecting gases produced by the porous structure, wherein the second gas collection opening extends through the porous structure such that gases penetrating the first porous layer may leave the porous structure via the second gas collection opening.
32a. The electrode of Claim 31a, wherein the porous structure is symmetrical about a symmetry axis, and wherein the first gas collection opening and the second gas collection opening are mirror images of each other arranged on opposite sides of said symmetry axis.
33a. The electrode of any one of Claims 30a to 32a, wherein the first gas collection opening is a through hole, said through hole preferably comprising a porous side wall.
34a. The electrode of any one of Claims 30a to 33a, comprising a porous insert received within the first gas collection opening.
35a. The electrode of any one of Claims 30a to 34a, when dependent on Claim 31, comprising a non-porous insert received within the second gas collection opening.
36a. The electrode of any one of Claims 30a to 35a, wherein the porous structure comprises a first electrolyte collection opening, which extends through the porous structure and is configured for collecting electrolyte water that penetrated the first porous surface, wherein the first electrolyte collection opening extends through the porous structure such that electrolyte water penetrating the first porous layer may leave the porous structure via the first electrolyte collection opening.
37a. The electrode of Claim 36a, wherein the first electrolyte opening is arranged in the porous structure such that the first electrolyte collection opening extends through a lower half of the porous structure, when in use.
38a. The electrode of Claim 36a or 37a, wherein the porous structure is symmetrical about a symmetry axis, and wherein the first gas collection opening and the first electrolyte collection opening are mirror images of each other.
39a. The electrode of any one of Claims 36a to 38a, wherein the porous structure comprises a second electrolyte collection opening, which extends through the porous structure and is configured for collecting electrolyte water penetrating the first porous surface, wherein the second electrolyte collection opening extends through the porous structure such that electrolyte water penetrating the first porous surface may leave the porous structure via the second electrolyte collection opening.
40a. The electrode of Claim 39a, wherein the porous structure is symmetrical about a symmetry axis, and wherein the first electrolyte collection opening and the second electrolyte collection opening are mirror images of each other.
41a. The electrode of any one of Claims 30a to 40a, wherein the first surface of the porous structure is part of a first porous layer, and wherein the porous structure comprises a second porous layer permeable to gases produced by the decomposition of electrolyte water and arranged adjacent to the first porous layer, wherein the second porous layer has a larger porosity than the first porous layer.
42a. The electrode of Claim 41a, wherein the first opening extends through the second porous layer.
43a. The electrode of Claim 41a or 42a, wherein the porous structure comprises a third porous layer permeable to gases produced by the decomposition of electrolyte water and arranged adjacent to the second porous layer, the third porous layer comprising a substantially identical porosity to the first porous layer, wherein the second porous layer is preferably sandwiched between the first and third porous layers.
44a. The electrode of any one of Claims 30a to 43a, wherein the electrode comprises a non-permeable channel extending thorough the porous structure.
45a. The electrode of any one of Claims 30a to 44a, comprising a non-porous housing surrounding at least a part of the porous structure.
46a. An electrode stack comprising:
   - a first electrode according to any one of Claims 30a to 45a;
   - a second electrode according to any one of Claims 30a to 45a; and
   - an electrolyte chamber extending between the porous structures of the first and second electrodes.
47a. The electrode stack of Claim 46a, when dependent on Claim 31a, wherein the first and second electrodes are arranged with respect to each other such that the first gas collection openings of the first and second electrodes are axially aligned with one another.
48a. The electrode stack of Claim 46a or 47a, comprising a gasket arranged between the first and second electrodes, said gasket acting as a spacer between the first and second electrode for creating a cell gap defining the electrolyte chamber.
49a. The electrode stack of Claim 48a, wherein the gasket comprises a first gasket opening, said gasket being axially aligned with the first gas collection openings of the first and second electrode.
50a. The electrode stack of any one of Claims 46a to 49a,
   wherein the porous structure of the first and second electrodes comprises a second porous layer permeable to gases produced by the decomposition of electrolyte water and arranged adjacent to the first porous layer, wherein the second porous layer has a larger porosity than the first porous layer,
   wherein the porous structure comprises a third porous layer permeable to gases produced by the decomposition of electrolyte water and arranged adjacent to the second porous layer, the third porous layer comprising a substantially identical porosity to the first porous layer, wherein the second porous layer is preferably sandwiched between the first and third porous layers, and
   wherein the electrolyte chamber extends between the third porous layer of the first electrode and the first porous layer of the second electrode.
51a. The electrode stack of Claim 50a, when dependent on Claim 48a or 49a, wherein the gasket is arranged between the third porous layer of the first electrode and the first porous layer of the second electrode.
52a. An electrolyser for generating hydrogen from water, said electrolyser comprising:
   - an electrode stack according to any one of Claims 46a to 51a;
   - an electrolyte supply circuit for supplying pressurised electrolyte water to the electrolyte chamber of the electrode stack;
   - an electric power supply comprising a positive terminal and a negative terminal, wherein the positive terminal is connected to the first electrode and the negative terminal is connected to the second electrode.
53a. The electrolyser of Claim 52a, comprising a control unit configured to control the electrolyte supply circuit such that a pressure of the electrolyte water supplied to the electrolyte chamber is above a gas outlet pressure of the electrolyser, preferably at least 5 bar above the gas outlet pressure of the electrolyser.
54a. An electrode assembly for a bipolar electrolyser stack, preferably for an electrolyser stack for generating hydrogen, comprising:
   - a first flow-through electrode comprising a first surface that is permeable to gases produced by the decomposition of a process solution, preferably water, and an opposite second surface;
   - a second flow-through electrode comprising a first surface that is permeable to gases produced by the decomposition of a process solution, preferably water, and an opposite second surface;
   - a non-permeable divider arranged between the second surfaces of the first and second flow-through electrodes and adapted to separate the first and second flow-through electrodes from each other.
55a. The electrode assembly of Claim 54a, comprising a housing, preferably disc-shaped housing, adapted to receive the first flow-through electrode, the second flow-through electrode, and the non-permeable divider, wherein the housing comprises at least one first gas collection opening for receiving gases produced by decomposition of a process solution in the first flow-through electrode and at least one second gas collection opening for receiving gases produced by decomposition of a process solution in the second flow-through electrode.
56a. The electrode assembly of Claim 55a, wherein the at least one first gas collection opening is isolated from the second flow-through electrode, and/or wherein the at least one second gas collection opening is isolated from the first flow-through electrode.
57a. The electrode assembly of Claims 55a or 56a, wherein the at least one first gas collection opening circumferentially offset from the at least one second gas collection opening.
58a. The electrode assembly of any one of Claims 55a to 57a, wherein the first flow-through electrode comprises at least one outlet lug protruding radially from a circumferential surface of the first flow-through electrode, said at least one outlet lug comprising an outlet opening that is aligned with the at least one first gas collection opening of the housing, and/or wherein the second flow-through electrode comprises at least one outlet lug protruding radially from a circumferential surface of the second flow-through electrode, said at least one outlet lug comprising an outlet opening being aligned with the at least one second gas collection opening of the housing.
59a. The electrode assembly of any one of Claims 55a to 58a, wherein the first and second flow-through electrodes are substantially disc-shaped and arranged in parallel within the housing, and wherein the first and second flow-through electrodes are offset from each other in a circumferential direction.
60a. The electrode assembly of any one of Claims 55a to 59a, wherein the housing comprises an alignment element, particularly an alignment collar, for arranging the first and second flow-through electrodes in a circumferentially offset manner.
61a. The electrode assembly of Claim 60a, wherein the alignment element comprises at least one first protrusion, particularly a radial protrusion, adapted to engage at least one first recess, particularly a radial recess, of the first flow-through electrode, and wherein the alignment element comprises at least one second protrusion, particularly a radial protrusion, adapted to engage at least one second recess, particularly a radial recess, of the second flow-through electrode.
62a. The electrode assembly of any one of Claims 55a to 61a, wherein the housing comprises at least one electrolyte water channel, preferably extending longitudinally through the housing, and at least one connection duct configured to fluidly connect the at least one electrolyte channel with the first and/or the second flow-through electrode.
63a. The electrode assembly of Claim 62a, wherein the electrolyte water channel is circumferentially interspersed between the gas collection openings of the housing.
64a. The electrode assembly of Claim 62a or 63a, wherein the housing comprises a first electrolyte water channel for providing a first electrolyte solution to the first flow-through electrode and a second electrolyte water channel for providing a second electrolyte solution to the second flow-through electrode, said first and second electrolyte water channels extending substantially in parallel through the housing.
65a. The electrode assembly of any one of Claims 62a to 64a, wherein the at least one connection duct is a radial duct, preferably a radial groove.
66a. The electrode assembly of any one of Claims 54a to 65a, wherein the first flow-through electrode and/or the second flow-through electrode comprises:
   - a first porous layer permeable to gases produced by the decomposition of electrolyte water;
   - a second porous layer permeable to gases produced by the decomposition of electrolyte water, said second porous layer being arranged adjacent to the first porous layer,
   wherein the second porous layer has a larger porosity than the first porous layer.
67a. The electrode assembly of Claim 66a, wherein the first surface is arranged on the first porous layer, and wherein the second surface is arranged on the second porous layer.
68a. The electrode of Claim 66a or 67a, wherein the first and second porous layers are made from different raw product, preferably the first porous layer being made from sintered powder material and the second porous layer being made from sintered swarf.
69a. The electrode assembly of any one of Claims 54a to 68a, comprising a housing, preferably disc-shaped housing, adapted to receive the first flow-through electrode, the second flow-through electrode, and the non-permeable divider, wherein the housing comprises at least one first gas collection opening for receiving gases produced by decomposition of a process solution in the first flow-through electrode and at least one second gas collection opening for receiving gases produced by decomposition of a process solution in the second flow-through electrode,
   wherein the second porous layer of the first flow-through electrode is connected the first gas collection opening, and wherein the second porous layer of the second flow-through electrode is connected the second gas collection opening.
70a. An electrode stack comprising:
   - a first electrode assembly according to any one of Claims 54a to 69a;
   - a second electrode assembly according to any one of Claims 54a to 69a; and
   - an electrolyte chamber extending between the first surface of the first electrode assembly and the first surface of the second electrode assembly.
71a. The electrode stack of Claim 71a, comprising a gasket arranged between the first and second electrodes, said gasket acting as a spacer between the first and second electrode for creating a cell gap defining the electrolyte chamber.
72a. The electrode stack of Claim 70a or 71a, wherein the first electrode assembly is arranged on top of the second electrode assembly in a vertical direction.
73a. A method of manufacturing an electrode assembly for electrolysis of water comprising:
   - providing a non-permeable divider;
   - sintering a second porous layer made of a second material onto the non-permeable divider;
   - sintering a first porous layer made of a first material onto the second porous layer;
   wherein the first and second materials are chosen such that the second porous layer has a larger porosity than the first porous layer.

## Claims

1. An electrode assembly for a bipolar electrolyser stack, preferably for an electrolyser stack, comprising:
• a first flow-through electrode comprising a first surface that is permeable to gases produced by the decomposition of a process solution, preferably water, and an opposite second surface;
• a second flow-through electrode comprising a first surface that is permeable to gases produced by the decomposition of a process solution, preferably water, and an opposite second surface;
• a non-permeable divider arranged between the second surfaces of the first and second flow-through electrodes and adapted to separate the first and second flow-through electrodes from each other.

2. The electrode assembly of Claim 1, comprising a housing, preferably disc-shaped housing, adapted to receive the first flow-through electrode, the second flow-through electrode, and the non-permeable divider, wherein the housing comprises at least one gas collection opening for receiving gases produced by decomposition of a process solution in the first flow-through electrode and gases produced by decomposition of a process solution in the second flow-through electrode.

3. The electrode assembly of Claim 2, wherein the first and second flow-through electrodes are substantially disc-shaped and arranged in parallel within the housing.

4. The electrode assembly of Claim 2 or 3, wherein the housing comprises at least one electrolyte water channel, preferably extending longitudinally through the housing, and at least one connection duct configured to fluidly connect the at least one electrolyte channel with the first and/or the second flow-through electrode.

5. The electrode assembly of any one of Claims 1 to 4, wherein the first flow-through electrode and/or the second flow-through electrode comprises:
• a first porous layer permeable to gases produced by the decomposition of electrolyte water;
• a second porous layer permeable to gases produced by the decomposition of electrolyte water, said second porous layer being arranged adjacent to the first porous layer,
wherein the second porous layer has a larger porosity than the first porous layer.

6. The electrode assembly of Claim 5, wherein the first surface is arranged on the first porous layer, and wherein the second surface is arranged on the second porous layer.

7. The electrode assembly of Claim 5 or 6, wherein the first and second porous layers are made from different raw product.

8. The electrode assembly of any one of Claims 1 to 7,
wherein the non-permeable divider conducts electricity to enable the bipolar arrangement of the electrode assembly within a stack, wherein the non-permeable divider is preferably made of stainless steel.

9. The electrode assembly of any one of Claims 1 to 8,
wherein the electrode assembly comprises a plurality of electrolyte water channels for providing process fluids, such as water or electrolyte water, to the electrodes for the electrolysis process.

10. The electrode assembly of any one of Claims 1 to 9,
wherein the electrode assembly comprises at least one electrolyte collection opening arranged to receive electrolyte water that needs to be drained from the electrodes.

11. An electrode stack comprising:
• a first electrode assembly according to any one of Claims 1 to 10;
• a second electrode assembly according to any one of Claims 1 to 10; and
• an electrolyte chamber extending between the first surface of the first electrode assembly and the first surface of the second electrode assembly.

12. The electrode stack of Claim 11, comprising a gasket arranged between the first and second electrodes, said gasket acting as a spacer between the first and second electrode for creating a cell gap defining the electrolyte chamber.

13. The electrode stack of Claim 11 or 12, wherein the first electrode assembly is arranged on top of the second electrode assembly in a vertical direction.

14. An electrolyser for generating hydrogen from water, said electrolyser comprising:
• an electrode stack according to any one of Claims 8 to 10;
• an electrolyte supply circuit for supplying pressurised electrolyte water to the electrolyte chamber of the electrode stack;
• an electric power supply comprising a positive terminal and a negative terminal, wherein the positive terminal is connected to the first electrode assembly and the negative terminal is connected to the second electrode assembly, and wherein the electrode assemblies are connected electrically in series.

15. A method of manufacturing an electrode assembly for electrolysis of water comprising:
• providing a non-permeable divider;
• sintering a second porous layer made of a second material onto the non-permeable divider;
• sintering a first porous layer made of a first material onto the second porous layer;
wherein the first and second materials are chosen such that the second porous layer has a larger porosity than the first porous layer.
